# EUROPEAN PATENT APPLICATION

(11) **EP 4 197 631 A1**
(43) Date of publication of application: **21.06.2023**
(21) Application number: 21885363.8
(22) Date of filing: 01.11.2021
(51) Int. Cl.: B01J 23/755, B01J 27/19, B01J 29/40, C10G 45/06, B01J 23/888, C10G 65/02, C10G 45/04, C10G 45/08, B01J 37/20

(54) **ADSORBENT, LIQUID PHASE HYDROGENATION CATALYST COMPOSITION, CATALYST BED AND USE THEREOF**

(30) Priority: 31.10.2020 CN 202011198740; 22.12.2020 CN 202011530014; 22.12.2020 CN 202011526437
(71) Applicant: China Petroleum & Chemical Corporation, Beijing 100728 (CN); Dalian Research Institute Of Petroleum And Petrochemicals, Sinopec Corp., Dalian, Liaoning Province (CN)
(72) Inventor: YANG, Chengmin, Dalian, Liaoning 116045 (CN); LIU, Li, Dalian, Liaoning 116045 (CN); DUAN, Weiyu, Dalian, Liaoning 116045 (CN); GUO, Rong, Dalian, Liaoning 116045 (CN); ZHOU, Yong, Dalian, Liaoning 116045 (CN); LI, Yang, Dalian, Liaoning 116045 (CN); YAO, Yunhai, Dalian, Liaoning 116045 (CN); ZHENG, Bumei, Dalian, Liaoning 116045 (CN); SUN, Jin, Dalian, Liaoning 116045 (CN)
(74) Representative: karo IP
(86) International application number: PCT/CN2021/127928
(87) International publication number: WO 2022/089637

(57) **Abstract**

The present invention relates to an adsorbent, a liquid-phase hydrogenation catalyst composition comprising the adsorbent, a catalyst bed comprising the liquid-phase hydrogenation catalyst composition, and application thereof in adsorption technology or oil liquid-phase hydrogenation technology. The adsorbent comprises a porous material and a hydrogenation active metal supported on the porous material, wherein the adsorbent has an average pore diameter of 2-15 nm, a specific surface area of 200-500 m²/g, and the hydrogenation active metal is present in an amout, calculated as metal oxide, of 2.5 wt% or less, based on the total weight of the adsorbent. The adsorbent has a high hydrogen sulfide adsorption efficiency for a long period of time, and can effectively prolong the protection period for the hydrodesulfurization catalyst.

## Description

### Technical Field

The present application relates to the technical field of liquid-phase hydrogenation of oils, particularly to an adsorbent, a liquid-phase hydrogenation catalyst composition comprising the adsorbent, a catalyst bed comprising the liquid-phase hydrogenation catalyst composition, and application of the same in adsorption technology or liquid-phase hydrogenation technology for oils.

### Background Art

Conventional diesel hydrodesulfurization adopts a trickle bed technology, and the sulfur-containing compounds and the like in the diesel feedstock are hydrogenated under the coexistence of gas phase, liquid phase and solid phase to produce clean fuels meeting the national requirements. Liquid phase diesel hydrogenation is a new technology which has been developed in recent years, and a diesel feedstock comprising impurities such as sulfur is hydrogenated in a liquid-solid two-phase system. Compared with the trickle bed technology, the feedstock for liquid phase diesel hydrogenation is continuously contacted with the catalyst, which is more advantageous in the mass transfer of dissolved hydrogen, sulfur-containing compounds to be reacted and the like in the feedstock.

Although liquid-phase hydrogenation has advantages in mass transfer, for the working condition of producing State VI diesel from high-sulfur feedstock, sulfur removed from the feedstock by hydrogenation is dissolved in the liquid phase of the reaction system in the form of hydrogen sulfide, causing a high hydrogen sulfide content in the reaction system, which inhibits the migration of the hydrodesulfurization reaction balance towards the desulfurization direction. When the sulfur content in the diesel feedstock is high, an inhibiting effect can be clearly obsered is generated, and the sulfur content of the product diesel oil is difficult to satify the standard.

Conventional trickle-bed technology can find a solution in dealing with high-sulfur diesel feedstocks. The hydrogen sulfide generated can be diffused from the liquid phase to the gas phase by increasing the hydrogen flow rate entering the reactor, namely, increasing the hydrogen-to-oil ratio, and the hydrogen sulfide is carried out of the reaction system by the large amount of hydrogen. However, to maintain the reaction system in a liquid-solid two-phase state, liquid-phase hydrogenation technology does not allow the increase of the hydrogen flow rate, and thus lacks an effective solution for dealing with high-sulfur diesel feedstocks, which weakens the advantages brought by the improvement of mass transfer performance.

CN103789029A discloses a combined two-phase hydrogenation process, in which a partition plate is provided in the middle of a high-pressure separator of a conventional gas-phase circulation hydrogenation apparatus, and the high-pressure separator is divided into a gas-liquid separation chamber and a hydrogen dissolution chamber. The middle distillate oil from which impurities are difficult to be removed is processed by adopting a gas-phase circulating hydrogenation process, the material generated is passed to a gas-liquid separation chamber for gas-liquid separation, the liquid phase separated is passed to a fractionation system, and the gas phase is introduced into the bottom of the hydrogen dissolving chamber through a pipeline and is countercurrently contacted with the two-phase hydrogenation feedstock and the circulating oil which enter the middle upper part of the hydrogen dissolving chamber. The two-phase hydrogenation feedstock and the circulating oil after hydrogen dissolution is fed to a two-phase hydrogenation reactor for hydrogenation reaction.

CN102876368A discloses a liquid-phase diesel hydrogenation process, wherein a fresh diesel feed is mixed with hydrogen in a hydrogen mixing tank and then fed to a liquid-phase hydrogenation reactor for hydrorefining reaction, the reaction effluent is decompressed by a decompression valve without heat exchange and then passed to a high-temperature low-pressure flash tank for flash evaporation, a part of the resulting liquid phase is reccycled to the hydrogen mixing tank after being mixed with the fresh feed, and then mixed with hydrogen in the hydrogen mixing tank, and the other part of the liquid phase is mixed with the flash vapor and then is separated, to obtain a diesel product.

CN108855115A discloses a coated catalyst, which comprises a hydrodesulfurization active component, a sulfur adsorbent and a carrier, wherein the hydrodesulfurization active component is present in an amount of 2.0-20.0 wt%, the sulfur adsorbent is present in an amount of 30.0-80.0 wt%, and the carrier is present in a balance amount.

### Disclosure of the Invention

The product hydrogen sulfide of liquid-phase hydrogenation has an inhibiting effect on the reaction system, and thus removal of hydrogen sulfide or elimination or reduction of the inhibiting effect thereof has been a technical problem. To address this technical challenge, the prior art has combined an adsorbent component with a hydrodesulfurization catalytic component, to provide protection for the hydrodesulfurization catalytic component by chemisorption of hydrogen sulfide on the adsorbent component. However, the inventors of the present application have found that such a chemisorbent has the disadvantage of limited capacity for hydrogen sulfide adsorption due to the upper saturation limit of chemisorption, which causes a short duration of the adsorption efficacy of the adsorbent on hydrogen sulfide and a short protection period of the hydrodesulfurization catalytic component. For this reason, after extensive research, the inventors of the present application have found an adsorbent having a specific structure and composition, which is capable of achieving temporary adsorption and temporary aggregation of hydrogen sulfide during liquid-phase hydrogenation, thereby reducing the concentration of hydrogen sulfide on the catalyst component having hydrogenation reaction activity, reducing the influence of hydrogen sulfide on the hydrogenation reaction, and reducing the inhibition effect of hydrogen sulfide on the hydrodesulfurization catalyst, while the adsorption is reversible (in-situ adsorption and desorption). Moreover, the adsorbent has self-cleaning ability, can maintain the adsorption efficiency of hydrogen sulfide for a long time, and does not need a regeneration process required by a chemical adsorbent.

Specifically, the present application relates to the following aspects.
1. A liquid-phase hydrogenation catalyst composition, comprising at least one hydrogenation catalytic component having desulfurization activity and at least one sulfur-adsorbing component;
   the sulfur-adsorbing component comprises a porous adsorbing material and hydrogenation active metal supported on the porous adsorbing material, wherein the porous adsorbing material is present in an amount of 90% by mass or more, and the hydrogenation active metal is present in an amount of 10% by mass or less, calculated as oxides, based on the total weight of the sulfur-adsorbing component.
2. The liquid-phase hydrogenation catalyst composition according to any one of the preceding or subsequent aspects, wherein the hydrogenation catalytic component having desulfurization activity is present in an amount of 30% to 99%, preferably 40% to 97%, more preferably 60% to 95% by weight.
3. The liquid-phase hydrogenation catalyst composition according to any one of the preceding or subsequent aspects, wherein the sulfur-adsorbing component is present in an amount of 1% to 70%, preferably 3% to 60%, more preferably 5% to 40%.
4. The liquid-phase hydrogenation catalyst composition according to any one of the preceding or subsequent aspects, wherein the sulfur-adsorbing component has a particle size of 0.5-5.0 mm, and the hydrogenation catalyst having desulfurization activity has a particle size of 0.5-4.0 mm.
5. The liquid-phase hydrogenation catalyst composition according to any of the preceding or subsequent aspects, wherein the sulfur-adsorbing component has a hydrogen sulfide adsorbing capacity that is 20% to 500% higher than that of the hydrogenation catalyst having desulfurization activity at a temperature of 250 °C to 400 °C.
6. The liquid-phase hydrogenation catalyst composition according to any of the preceding or subsequent aspects, wherein the sulfur-adsorbing component has an average pore diameter that is from 10-80%, preferably from 20-60%, of that of the hydrogenation catalyst having desulfurization activity.
7. The liquid-phase hydrogenation catalyst composition according to any of the preceding or subsequent aspects, wherein the sulfur-adsorbing component has a specific surface area of 110% to 300%, preferably 110% to 200%, of the specific surface area of the hydrogenation catalyst having desulfurization activity.
8. The liquid-phase hydrogenation catalyst composition according to any of the preceding or subsequent aspects, wherein the porous adsorbing material is at least one selected from the group consisting of activated carbon, alumina, silica, magnesia, zirconia, titania and molecular sieves.
9. The liquid-phase hydrogenation catalyst composition according to any one of the preceding or subsequent aspects, wherein the hydrogenation active metal in the sulfur-adsorbing component is at least one selected from the group consisting of Fe, Co, Ni, Cu, Zn, Cr, Mo and W.
10. The liquid-phase hydrogenation catalyst composition according to any one of the preceding or subsequent aspects, wherein the sulfur-adsorbing component is prepared by a method for preparing supported catalysts, which comprises: subjecting the porous adsorbing material to extrusion molding, drying and calcining, impregnating the resultant with the hydrogenation active metal, and then drying and calcining to obtain the sulfur-adsorbing component.
11. The liquid-phase hydrogenation catalyst composition according to any of the preceding or subsequent aspects, wherein the hydrogenation catalytic component having desulfurization activity is at least one selected from the group consisting of supported catalysts and unsupported catalysts.
12. The liquid-phase hydrogenation catalyst composition according to any one of the preceding or subsequent aspects, wherein the supported catalyst comprises a carrier and a hydrogenation active component, and a catalyst modified on this basis, and the hydrogenation active component is present in an amount of 15-40% by mass, calculated as metal oxide, based on the total weight of the catalyst.
13. The liquid-phase hydrogenation catalyst composition according to any one of the preceding or subsequent aspects, wherein the unsupported catalyst comprises at least a necessary binder and a hydrogenation active component, wherein the hydrogenation active component is present in an amount of 30-80% by mass, calculated as metal oxide, based on the total weight of the catalyst.
14. The liquid-phase hydrogenation catalyst composition according to any one of the preceding or subsequent aspects, wherein the carrier in the supported catalyst and the binder in the unsupported catalyst are inorganic refractory oxide that is at least one selected from the group consisting of the oxides of elements of Groups II, III, IV and IVB of the periodic table.
15. The liquid-phase hydrogenation catalyst composition according to any one of the preceding or subsequent aspects, wherein the hydrogenation active component is oxides of Group VIB metal and Group VIII metal, wherein the Group VIB metal is Mo and/or W and the Group VIII metal is Co and/or Ni.
16. The liquid-phase hydrogenation catalyst composition according to any one of the preceding or subsequent aspects, wherein the Group VIB metal oxide is present in the catalyst in an amount of 15-30% by mass, and the Group VIII metal oxide is present in the catalyst in an amount of 2-10% by mass.
17. The liquid-phase hydrogenation catalyst composition according to any one of the preceding or subsequent aspects, wherein the supported catalyst is prepared by subjecting the inorganic refractory oxide to extrusion molding, drying and calcining, impregnating with the hydrogenation active component, and then drying and calcining, to obtain the hydrogenation catalytic component having desulfurization activity.
18. The liquid-phase hydrogenation catalyst composition according to any one of the preceding or subsequent aspects, wherein the unsupported catalyst is a homogeneous catalyst prepared by coprecipitating the hydrogenation active component and the binder component.
19. Use of the liquid-phase hydrogenation catalyst composition according to any one of the preceding or subsequent aspects in the liquid-phase hydrogenation reaction of an oil.
20. The use according to any one of the preceding or subsequent aspects, wherein the two components in the catalyst composition are uniformly mixed and filled into a reactor, and an oil is introduced for hydrogenation.
21. The use according to any one of the preceding or subsequent aspects, wherein the hydrogenation catalytic component having desulfurization activity in the catalyst composition is subjected to a sulfurization treatment before use, and the sulfur-adsorbing component does not have to be subjected to a sulfurization treatment.

Specifically, the present application also relates to the following aspects.
1. An adsorbent (particularly a hydrogen sulfide adsorbent), characterized by comprising a porous material and a hydrogenation active metal supported on the porous material, wherein the adsorbent has an average pore diameter of 2-15 nm (preferably 2-10 nm), a specific surface area of 200-500 m²/g (preferably 250-400 m²/g), and the hydrogenation active metal is present in an amount, calculated as metal oxide, of 2.5 wt% or less (preferably 2 wt% or less, 1.5wt% or less, or 0.05-1 wt%), based on the total weight of the adsorbent.
2. The adsorbent according to any one of the preceding or subsequent aspects, wherein the hydrogenation active metal is present as an oxide/sulfide, and/or the adsorbent is in a fully sulfurized state, and/or the adsorbent has a sulfur content (calculated as elemental sulfur) of 3 wt% or less (preferably 2 wt% or less, 1 wt% or less, or 0.5 wt% or less, but preferably 0.4 wt% or more, 0.5 wt% or more, 1.0 wt% or more, or 1.3 wt% or more), based on the total weight of the adsorbent.
3. The adsorbent according to any one of the preceding or subsequent aspects, is a physical adsorbent for hydrogen sulfide, having a hydrogen sulfide retention time of 30-300 min (preferably 40-250 min, more preferably 60-180 min).
4. The adsorbent according to any one of the preceding or subsequent aspects, wherein the porous material is present in an amount of 90 wt% or more (preferably 92 wt% or more, 94 wt% or more, 95 wt% or more, 98 wt% or more, or 98-99.5 wt%), based on the total weight of the adsorbent, and/or the porous material is at least one selected from the group consisting of activated carbon, inorganic refractory oxides (particularly at least one selected from alumina, silica, magnesia, zirconia and titania) and molecular sieves (particularly at least one selected from alumina and silica), and/or the hydrogenation active metal is at least one selected from the group consisting of Fe, Co, Ni, Cu, Zn, Cr, Mo and W (preferably at least one selected from Fe, Zn, Ni, Co and Cu, more preferably at least one selected from Fe and Ni).
5. The adsorbent according to any one of the preceding or subsequent aspects, wherein the adsorbent has a particle size of 0.5-5.0 mm (preferably 1-4 mm).
6. An adsorption method, comprising a step of bringing an adsorbent according to any one of the preceding or subsequent aspects into contact with a material comprising a sulfur-containing compound (particularly hydrogen sulfide) to adsorb (particularly reversibly adsorb) the sulfur-containing compound (referred to as an adsorption step), and optionally a step of subjecting the adsorbent to a sulfurization treatment (referred to as a sulfurization step) before conducting the adsorption step.
7. A liquid-phase hydrogenation catalyst composition, comprising at least one hydrogenation catalytic component having desulfurization activity and at least one sulfur-adsorbing component, wherein the sulfur-adsorbing component comprises a porous material and a hydrogenation active metal supported on the porous material, wherein the sulfur-adsorbing component has an average pore diameter of 2-15 nm (preferably 2-10 nm), and a specific surface area of 200-500 m²/g (preferably 250-400 m²/g), the hydrogenation active metal is present in an amount of 10 wt% or less (preferably 8 wt% or less, 6 wt% or less, 5 wt% or less, 2.5 wt% or less, 2 wt% or less, 1.5 wt% or less, or 0.05-1 wt%), calculated as metal oxide and based on the total weight of the sulfur-adsorbing component, and the mass content of the hydrogenation active metal in the sulfur-adsorbing component (calculated as metal oxide and based on the total weight of the sulfur-adsorbing component) is 0.06-66% (preferably 1.88-25%, more preferably 2.30-25%) of the mass content of the hydrogenation active component in the hydrogenation catalytic component having desulfurization activity (calculated as metal oxide and based on the total weight of the hydrogenation catalytic component having desulfurization activity).
8. The liquid-phase hydrogenation catalyst composition according to any one of the preceding or subsequent aspects, wherein the weight ratio of the hydrogenation catalytic component having desulfurization activity to the sulfur-adsorbing component is 30-99 : 1-70 (preferably 40-97: 3-60, more preferably 60-95: 5-40), and/or the hydrogenation catalytic component having desulphurisation activity is present in solid particulate form, the sulfur-adsorbing component is present in solid particulate form, and the hydrogenation catalytic component having desulphurisation activity and the sulfur-adsorbing component are present in forms separate from each other (such as separate aggregates or physical mixtures).
9. The liquid-phase hydrogenation catalyst composition according to any one of the preceding or subsequent aspects, wherein the hydrogenation catalytic component having desulfurization activity is present as porous solid particles having a particle size of 0.5-4.0 mm (preferably 1-4 mm), and/or the hydrogenation catalytic component having desulfurization activity has an average pore diameter of 2-30 nm (preferably 5-25 nm), and/or the hydrogenation catalytic component having desulfurization activity has a specific surface area of 100-400 m²/g (preferably 150-300 m²/g), and/or the sulfur-adsorbing component has a hydrogen sulfide retention time that is 1.3 to 5.0 times (preferably 1.5 to 3.0 times or 2.0 to 3.0 times) that of the hydrogenation catalyst having desulfurization activity, and/or the sulfur-adsorbing component has an average pore diameter that is 10-80% (preferably 20-60% or 20-70%, more preferably 40-65%) of the average pore diameter of the hydrogenation catalyst having desulfurization activity, and/or the sulfur-adsorbing component has a specific surface area that is 110-300% (preferably 110-200%, more preferably 115-160%) of the specific surface area of the hydrogenation catalyst having desulfurization activity.
10. The liquid-phase hydrogenation catalyst composition according to any one of the preceding or subsequent aspects, wherein the hydrogenation catalytic component having desulfurization activity is at least one selected from the group consisting of supported catalysts and unsupported catalysts.
11. The liquid-phase hydrogenation catalyst composition according to any one of the preceding or subsequent aspects, wherein the supported catalyst comprises a carrier and a hydrogenation active component, and/or the unsupported catalyst comprises a binder and a hydrogenation active component.
12. The liquid-phase hydrogenation catalyst composition according to any one of the preceding or subsequent aspects, wherein the hydrogenation active component is present in an amount of 15-40% (preferably 20-35%) by mass, calculated as metal oxide and based on the total weight of the supported catalyst, and/or the hydrogenation active component is present in an amount of 30-80% (preferably 40-65%) by mass, calculated as metal oxide and based on the total weight of the unsupported catalyst.
13. The liquid-phase hydrogenation catalyst composition according to any one of the preceding or subsequent aspects, wherein the carrier is an inorganic refractory oxide (preferably at least one selected from the group consisting of oxides of elements of Groups II, III, IV and IVB of the periodic table, more preferably at least one selected from the group consisting of alumina and silica), and/or the binder is an inorganic refractory oxide (preferably at least one selected from the group consisting of oxides of elements of Groups II, III, IV and IVB of the periodic table, more preferably at least one selected from alumina and silica), and/or, the hydrogenation active component is at least one selected from the group consisting of oxides of Group VIB metals and oxides of Group VIII metals (preferably, the Group VIB metal is Mo and/or W, and the Group VIII metal is Co and/or Ni).
14. The liquid-phase hydrogenation catalyst composition according to any one of the preceding or subsequent aspects, wherein the Group VIB metal is present in an amount of 15-30% (preferably 18-27%) by mass, calculated as metal oxide, the Group VIII metal is present in an amount of 2-10% (preferably 3-7%) by mass, calculated as metal oxide, based on the total weight of the supported catalyst, and/or the Group VIB metal is present in an amount of 15-60% (preferably 18-57%) by mass, calculated as metal oxide, and the Group VIII metal is present in an amount of 2-20% (preferably 3-18%) by mass, calculated as metal oxide, based on the total weight of the unsupported catalyst.
15. A catalyst bed (particularly a fixed bed), comprising a liquid-phase hydrogenation catalyst composition according to any one of the preceding or subsequent aspects.
16. The catalyst bed according to any one of the preceding or subsequent aspects, wherein at least one sub-catalyst bed A (preferably columnar sub-catalyst bed A) is formed along the material flow direction with the hydrogenation catalytic component having desulfurization activity, at least one sub-catalyst bed B (preferably columnar sub-catalyst bed B) is formed along the material flow direction with the sulfur-adsorbing component, and the sub-catalyst bed(s) A and the sub-catalyst bed(s) B are adjacent to each other in an alternative manner, and/or the hydrogenation catalytic component having desulfurization activity and the sulfur-adsorbing component are present in a substantially uniformly mixed form.
17. The catalyst bed according to any one of the preceding or subsequent aspects, wherein the sub-catalyst bed A has a cross section of any shape (such as at least one selected from the group consisting of rectangular, circular, oval, triangular, parallelogram, annular and irregular shapes), the sub-catalyst bed B has a cross section of any shape (such as at least one selected from the group consisting of rectangular, circular, oval, triangular, parallelogram, annular and irregular shapes), and/or, on any cross section of the catalyst bed, the straight-line distance from the center point of the cross section of any one of the sub-catalyst beds A to the center point of the cross section of any one of the sub-catalyst beds B adjacent thereto is not more than 500 mm (preferably not more than 200 mm), and/or, on any cross section of the catalyst bed, the area of the cross section of the sub-catalyst bed A and the area of the cross section of the sub-catalyst bed B, being the same as or different from each other, are each independently not more than 300000 mm² (preferably not more than 100000 mm²), and/or, on any cross section of the catalyst bed, the shortest distance from any point on the cross section of any one of the sub-catalyst beds A to the edge of the cross section of any one of the sub-catalyst beds B adjacent thereto is not more than 500 mm (preferably not more than 300 mm, more preferably not more than 200 mm, further preferably not more than 100 mm, most preferably not more than 50 mm).
18. The catalyst bed according to any one of the preceding or subsequent aspects, wherein the hydrogenation catalytic component having desulfurization activity accounts for 35-90% (preferably 45-80%, more preferably 50-75%), and the sulfur-adsorbing component accounts for 10-65% (preferably 20-55%, more preferably 25-50%) of the total volume of the catalyst bed.
19. The catalyst bed according to any one of the preceding or subsequent aspects, wherein the hydrogenation catalytic component having desulfurization activity is sulfurized, while the sulfur-adsorbing component is sulfurized or not sulfurized, and/or the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr.
20. A hydrogenation process (preferably a liquid-phase fixed bed hydrogenation process), comprising a step of bringing a liquid-phase hydrogenation catalyst composition according to any one of the preceding or subsequent aspects or a catalyst bed according to any one of the preceding or subsequent aspects into contact with an oil under liquid-phase hydrogenation conditions to conduct a hydrogenation reaction (referred to as a hydrogenation step).
21. The method according to any one of the preceding or subsequent aspects, wherein the oil is at least one selected from the group consisting of gasoline, kerosene, diesel oil, wax oil, residual oil and coal tar (preferably at least one selected from diesel oil, wax oil and residual oil), and/or the oil has a sulfur content (calculated as hydrogen sulfide) of 0.01-3.0 wt% (preferably 0.01-2.0 wt%), and/or the liquid-phase hydrogenation conditions include: a reaction temperature of 100-500 °C (preferably 100-450 °C), a reaction pressure of 1-20 MPaG (preferably 2-15 MPaG), a liquid hourly space velocity of 1-10 h⁻¹ (preferably 2-10 h⁻¹ , more preferably 2-8 h⁻¹), and a (dissolved) hydrogen content of the oil of 0.01-0.35 wt% (preferably 0.05-0.25 wt%).
22. The method according to any one of the preceding or subsequent aspects, further comprising a step of sulfurizing the liquid-phase hydrogenation catalyst composition or the catalyst bed prior to the hydrogenation step, and/or wherein the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr.

### Brief Description of the Drawings

Fig. 1 is a schematic view of the cross section of a reactor with a grading loading of catalyst D1 and catalyst A1 as described in Example 35.
Fig. 2 is a schematic view of the cross section of a reactor with a grading loading of catalyst D2 and catalyst A2 as described in Example 36.
Fig. 3 is a schematic view of the cross section of a reactor with a grading loading of catalyst D3 and catalyst A3 as described in Example 37.

### Technical effects

The adsorbent of the present application belongs to a physical adsorbent for hydrogen sulfide, has no upper limit for the adsorption capacity of hydrogen sulfide, and can continuously exert a hydrogen sulfide adsorption effect for a long time, and when used in combination with a hydrodesulfurization catalyst, it can effectively prolong the protection period for hydrodesulfurization catalyst compared with the prior art.

The adsorbent of the present application has a self-cleaning ability, and when used in combination with a hydrodesulfurization catalyst, can provide an effective protection for the hydrodesulfurization catalyst over its entire life cycle without the need for a regeneration process of chemisorbent.

By using a combination of the hydrogenation catalytic component and the sulfur-adsorbing component, the liquid-phase hydrogenation catalyst composition according to the present application can adsorb hydrogen sulfide during the liquid-phase hydrogenation process, and the desorption of the hydrogen sulfide on the sulfur-adsorbing component can be promoted with the flow of a liquid material, so that a dynamic balance between the adsorption and desorption can be achieved, and in turm the hydrogen sulfide in the material can be accumulated. That is, the hydrogen sulfide in the liquid phase is enriched onto the sulfur-adsorbing component at each thin layer height of the catalyst bed, and thus the hydrogen sulfide concentration on the hydrogenation catalytic component having desulfurization activity at the same height can be reduced, so that the influence of the hydrogen sulfide on the hydrogenation reaction can be reduced, the reaction efficiency can be improved, and a better hydrogenation effect can be achieved.

### Detailed Description of the Invention

The present application will be illustrated in detail hereinbelow with reference to embodiments thereof, but it should be noted that the scope of the present application is not limited by those embodiments, but is defined by the appended claims.

All publications, patent applications, patents, and other references cited herein are incorporated by reference in their entirety. Unless defined otherwise, all technical and scientific terms used herein have the same meaning as commonly understood by those skilled in the art. In case of conflict, the contents described herein, including definitions, should prevail.

Where a material, substance, method, step, device, component, or the like is described herein as "commonly known to those skilled in the art", "prior art" or the like, it is to be understood that said material, substance, method, step, device and component cover not only those conventionally used in the art at the time of filing the present application, but also those not commonly used at present but will become commonly known in the art to be suitable for a similar purpose.

In the context of the present application, unless specifically stated otherwise, all percentages, parts, ratios, etc. are expressed by weight and all pressures given are gauge pressures.

In the context of the present application, hydrogen sulfide retention time refers to the time over which 90% or more of the hydrogen sulfide adsorbed by the adsorbent is desorbed. Specifically, the method for measuring the hydrogen sulfide retention time includes: loading an adsorbent in a vessel with a diameter of 1 m and a height of 7 m to a height of 2.3 m, dissolving hydrogen and hydrogen sulfide in a diesel oil having a sulfur content (calculated as hydrogen sulfide) of 0.0003% to obtain a hydrogen sulfide content of 0.2% by mass, completely impregnating the adsorbent bed with the diesel oil under liquid-phase hydrogenation conditions for 0.2 h, then switching to a diesel oil having a sulfur content (calculated as hydrogen sulfide) of 0.0003% and comprising dissolved hydrogen to wash the adsorbent bed under liquid-phase hydrogenation conditions, and measuring the hydrogen sulfide content in the effluent until it is not more than 0.01% by mass, and recording the time taken from the start of the washing till a hydrogen sulfide content of not more than 0.01% by mass is obtained as the hydrogen sulfide retention time on the adsorbent. According to the present application, where the hydrogen sulfide retention time is too short, the adsorption strength for hydrogen sulfide is weak, and consequently no selective adsorption function can be exerted; and where the retention time is too long, the adsorption strength for hydrogen sulfide is too strong, and consequently a dynamic balance between hydrogen sulfide adsorption and desorption cannot be obtained, and the hydrogen sulfide concentration around the hydrogenation catalyst cannot be effectively reduced. Here, the liquid-phase hydrogenation conditions include: a reaction temperature of 25 °C, a reaction pressure of 6.3 MPaG, a liquid hourly space velocity of 1.3 h⁻¹, and the amount of dissolved hydrogen is the saturated dissolving amount of hydrogen in the diesel oil under 6.3 MPaG.

In the context of the present application, the average pore diameter and specific surface area are measured using nitrogen physisorption method and the metal content is measured using inorganic metal analysis method including colorimetric analysis and inductively coupled plasma atomic emission spectrometry.

In the context of the present application, unless specifically stated otherwise, the particle size refers to a volume average particle size, and its measurement can be normally carried out by a laser method.

In the context of the present application, any two or more embodiments of the present application may be arbitrarily combined, and the resulting technical solution forms a part of the initial disclosure of the present application and falls within the scope of the present application.

The endpoints of any numerical range and any numerical value described in the context of the present application is not restricted to the exact range or value, but should be interpreted to further encompass values close to said range or value. Moreover, regarding any numerical range described herein, arbitrary combinations can be made between the endpoints of the range, between each endpoint and any specific value within the range, or between any two specific values within the range, to provide one or more new numerical range(s), and said new numerical range(s) should also be deemed to have been specifically described in the present application.

According to an embodiment, the present application relates to an adsorbent, particularly a hydrogen sulfide adsorbent. It should be particularly noted that the adsorbent is a physical adsorbent for hydrogen sulfide in essence, its adsorption of hydrogen sulfide is reversible, and its chemisorption of hydrogen sulfide is substantially negligible or not needed to be considered in the present application. For this reason, unlike existing hydrogen sulfide chemisorbents, the adsorbent of the present application can be used in the sulfurized state. Specifically, the adsorbent of the present application may be used after a sulfurization treatment. Here, the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr. By this sulfurization treatment, the adsorbent of the present application exhibits substantially no chemisorption of hydrogen sulfide.

According to an embodiment of the present application, the adsorbent comprises a porous material and a hydrogenation active metal supported on the porous material.

According to the present application, as can be understood by those skilled in the art, the adsorbent can adsorb hydrogen sulfide, the adsorption is a temporary physical adsorption, the adsorbed hydrogen sulfide can be washed away by the flow of the liquid material, so that adsorption vacancies are restored on the adsorbent for adsorption of hydrogen sulfide in subsequent material. Thus, with the flow of the liquid material, the hydrogen sulfide is adsorbed and desorbed on the adsorbent continuously to obtain a dynamic balance, so as to achieve a concentrated adsorption of hydrogen sulfide in the liquid material. When the adsorbent is used in combination with a hydrodesulfurization catalyst, the concentration of hydrogen sulfide on or near the hydrodesulfurization catalyst can be reduced, and a better hydrogenation effect can be achieved. To this end, according to the present application, the adsorbent has an average pore diameter of from 2 nm to 15 nm, preferably from 2 nm to 10 nm. In addition, the adsorbent has a specific surface area of 200-500 m²/g, preferably 250-400 m²/g.

According to an embodiment of the present application, the adsorbent is a physical adsorbent for hydrogen sulfide. To this end, its hydrogen sulfide retention time is normally from 30 min to 300 min, preferably from 40 min to 250 min, more preferably from 60 min to 180 min. Unlike chemisorbents of hydrogen sulfide, the adsorbent of the present application has no upper limit for adsorption capacity of hydrogen sulfide and does not need to be regenerated for hydrogen sulfide adsorption capacity.

According to the present application, as can be understood by those skilled in the art, when used in combination with a hydrodesulfurization catalyst, for example in a liquid-phase hydrogenation environment, the adsorbent should also have a certain hydrogenation activity to inhibit coke formation due to the presence of coke formation reactions, thereby improving the stability of the adsorbent to ensure long term operation in the liquid-phase hydrogenation system. This coke formation inhibiting function is referred to herein as the self-cleaning ability of the adsorbent. To this end, according to the present application, the hydrogenation active metal is present in an amount, calculated as metal oxide, of 2.5 wt% or less, preferably 2 wt% or less, 1.5 wt% or less, or 0.05-1 wt%, based on the total weight of the adsorbent.

According to an embodiment of the present application, in the adsorbent, the hydrogenation active metal is present in the form of an oxide/sulfide. Preferably, as described above, the adsorbent of the present application is present in a sulfurized state, i.e., all of the hydrogenation active metals contained in the adsorbent are present in the form of a sulfide. To this end, the adsorbent preferably has a sulfur content (calculated as elemental sulfur) that is normally 3 wt% or less, preferably 2 wt% or less, 1 wt% or less, or 0.5 wt% or less, but preferably 0.4 wt% or more, 0.5 wt% or more, 1.0 wt% or more, or 1.3 wt% or more, based on the total weight of the adsorbent. By providing such a sulfur content (such as by the sulfurization treatment described above), the adsorbent of the present application exhibits substantially no chemisorption of hydrogen sulfide.

According to an embodiment of the present application, the porous material is present in an amount of 90 wt% or more, preferably 92 wt% or more, 94 wt% or more, 95 wt% or more, 98 wt% or more, or 98-99.5 wt%, based on the total weight of the adsorbent.

According to an embodiment of the present application, the porous material is at least one selected from the group consisting of activated carbon, inorganic refractory oxides and molecular sieves, particularly at least one selected from the group consisting of alumina, silica, magnesia, zirconia and titania, more particularly at least one selected from the group consisting of alumina and silica.

According to an embodiment of the present application, the hydrogenation active metal is at least one selected from Fe, Co, Ni, Cu, Zn, Cr, Mo and W, preferably at least one selected from Fe, Zn, Ni, Co and Cu, and more preferably at least one selected from Fe and Ni, from the viewpoint of the effect of inhibiting coke formation.

According to an embodiment of the present application, the adsorbent has a particle size of 0.5 mm to 5.0 mm, preferably 1 mm to 4 mm.

According to the present application, the adsorbent can be prepared by a method well known to those skilled in the art for preparing supported catalysts. More specifically, the porous material is subjected to extrusion molding, drying and calcining, then to impreganation with the hydrogenation active metal, and further to drying and calcining to obtain the adsorbent. As a more specific embodiment, the extrusion molding is carried out by blending the porous material with a peptizer, an extrusion aid, and the like, mixing uniformly, and extruding the mixture on a screw extruder, preferably to obtain a bar with a circular, oval, clover or four-leaf clover cross-section. The impregnation is preferably equivalent-volume impregnation, and the extruded porous material is impregnated with a stable salt solution of the hydrogenation active metal through equivalent-volume impregnation. For example, in the above preparation process, both of the two drying are carried out at 70-150 °C for 1-24 hours, and both of the two calcining are carried out at 300-600 °C for 1-10 hours.

According to an embodiment of the present application, there is also provided an adsorption method, comprising a step of contacting the adsorbent of the present application with a material comprising a sulfur-containing compound to adsorb the sulfur-containing compound (referred to as an adsorption step). Here, as the sulfur-containing compound, hydrogen sulfide may be particularly mentioned.

According to an embodiment of the present application, the adsorption method further comprises a step of subjecting the adsorbent to a sulfurization treatment (referred to as sulfurization step) prior to the adsorption step. Here, the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr. By such a sulfurization treatment, the adsorbent of the present application exhibits substantially no chemisorption of hydrogen sulfide.

According to an embodiment of the present application, it also relates to a liquid-phase hydrogenation catalyst composition, comprising at least one hydrogenation catalytic component having desulfurization activity and at least one sulfur-adsorbing component. Here, the at least one sulfur-adsorbing component may include an adsorbent described hereinabove (referred to as adsorbent A), an adsorbent described hereinbelow (referred to as adsorbent B), or a combination thereof, and is preferably the adsorbent A.

According to the present application, the adsorbent B differs from the adsorbent A only in the mass content of the hydrogenation active metal in the adsorbent. Specifically, in the adsorbent B, the hydrogenation active metal is present in an amount of 10 wt% or less, preferably 8 wt% or less, 6 wt% or less, 5 wt% or less, 2.5 wt% or less, 2 wt% or less, 1.5 wt% or less, or 0.05-1 wt%, calculated as metal oxide and based on the total weight of the adsorbent. In the context of the present application, unless otherwise specifically stated, both the adsorbent B and the adsorbent A are collectively referred to as the adsorbent or sulfur-adsorbing component of the present application without distinction.

According to an embodiment of the present application, from the viewpoint of both the coke formation inhibiting effect and the hydrogen sulfide adsorbing effect, and from the viewpoint of sufficiently exerting the respective intended functions of the sulfur-adsorbing component and the hydrogenation catalytic component having desulfurization activity, and at the same time, in order to better achieve a dynamic balance between the adsorption and desorption of hydrogen sulfide improve the hydrogenation performance, the mass content (calculated as metal oxide and based on the total weight of the sulfur-adsorbing component) of the hydrogenation active metal of the sulfur-adsorbing component is 0.06-66%, preferably 1.88-25%, more preferably 2.30-25% of the mass content (calculated as metal oxide and based on the total weight of the hydrogenation catalytic component having desulfurization activity) of the hydrogenation active component having desulfurization activity.

According to an embodiment of the present application, the weight ratio of the hydrogenation catalytic component having desulfurization activity to the sulfur-adsorbing component is 30-99: 1-70, preferably 40-97: 3-60, more preferably 60-95: 5-40.

According to an embodiment of the present application, the hydrogenation catalytic component having desulfurization activity is present in the form of solid particles and the sulfur-adsorbing component is present in the form of solid particles. Moreover, the hydrogenation catalytic component having desulfurization activity and the sulfur-adsorbing component are present in forms separate from each other, such as separate aggregates or physical mixtures. In other words, the hydrogenation catalytic component having desulfurization activity and the sulfur-adsorbing component are not combined into a whole, for example combined on the same particle by impregnation or other ways.

According to an embodiment of the present application, the hydrogenation catalytic component having desulfurization activity is a porous solid particle with a particle size ranging from 0.5 mm to 4.0 mm, preferably from 1 mm to 4 mm.

According to an embodiment of the present application, the average pore diameter of the hydrogenation catalytic component having desulfurization activity ranges from 2 nm to 30 nm, preferably from 5 nm to 25 nm.

According to an embodiment of the present application, the hydrogenation catalytic component having desulfurization activity has a specific surface area of 100-400 m²/g, preferably 150-300 m²/g.

According to an embodiment of the present application, from the viewpoint of sufficiently exerting the respective intended functions of the sulfur-adsorbing component and the hydrogenation catalytic component having desulfurization activity, and at the same time, in order to better achieve a dynamic balance between the adsorption and desorption of hydrogen sulfide to improve the hydrogenation performance, the hydrogen sulfide retention time of the sulfur-adsorbing component is 1.3 to 5.0 times, preferably 1.5 to 3.0 times or 2.0 to 3.0 times that of the hydrogenation catalyst having desulfurization activity.

According to an embodiment of the present application, from the viewpoint of sufficiently exerting the respective intended functions of the sulfur-adsorbing component and the hydrogenation catalytic component having desulfurization activity, and at the same time, in order to better achieve a dynamic balance between the adsorption and desorption of hydrogen sulfide to improve the hydrogenation performance, the sulfur-adsorbing component has an average pore diameter that is 10-80%, preferably 20-60% or 20-70%, more preferably 40-65%, of the average pore diameter of the hydrogenation catalyst having desulfurization activity.

According to an embodiment of the present application, from the viewpoint of sufficiently exerting the respective intended functions of the sulfur-adsorbing component and the hydrogenation catalytic component having desulfurization activity, and at the same time, in order to better achieve a dynamic balance between the adsorption and desorption of hydrogen sulfide to improve the hydrogenation performance, the sulfur-adsorbing component has a specific surface area that is 110-300%, preferably 110-200%, more preferably 115-160%, of the specific surface area of the hydrogenation catalyst having desulfurization activity.

According to an embodiment of the present application, the hydrogenation catalytic component having desulfurization activity may be any catalyst well known to those skilled in the art that has a desulfurization property and is useful for liquid-phase hydrogenation, and is at least one selected from the group consisting of supported catalysts and unsupported catalysts.

According to an embodiment of the present application, the supported catalyst comprises a carrier and a hydrogenation active component. In general, the hydrogenation active component is present in an amount of 15-40% by mass, preferably 20-35% by mass, calculated as metal oxide and based on the total weight of the supported catalyst.

According to an embodiment of the present application, the unsupported catalyst comprises a binder and a hydrogenation active component. In general, the hydrogenation active component is present in an amount of 30-80% by mass, preferably 40-65% by mass, calculated as metal oxide and based on the total weight of the unsupported catalyst.

According to an embodiment of the present application, the carrier may be an inorganic refractory oxide, preferably at least one selected from the group consisting of oxides of the elements of Groups II, III, IV and IVB of the periodic table, more preferably at least one selected from alumina and silica.

According to an embodiment of the present application, the binder is an inorganic refractory oxide, preferably at least one selected from the group consisting of oxides of the elements of Groups II, III, IV and IVB of the periodic table, more preferably at least one selected from alumina and silica.

According to an embodiment of the present application, the carrier or binder also covers materials formed by modifying the carrier or binder for the purpose including, but not limited to, enhancing the strength of the catalyst, increasing the activity of the catalyst, and the like. For example, the modifying may be performed using a modifying element, such as B, P, and F, and the modifying element may be present in an amount of 0.8-8 wt%, based on the weight of the modified carrier or binder.

According to an embodiment of the present application, the hydrogenation active component is at least one selected from the group consisting of oxides of Group VIB metals and oxides of Group VIII metals, preferably, the Group VIB metal is Mo and/or W and the Group VIII metal is Co and/or Ni.

According to an embodiment of the present application, the Group VIB metal is present in an amount of 15-30%, preferably 18-27%, by mass, calculated as metal oxide, and the Group VIII metal is present in an amount of 2-10%, preferably 3-7%, by mass, calculated as metal oxide, based on the total weight of the supported catalyst.

According to an embodiment of the present application, the Group VIB metal is present in an amount of 15-60%, preferably 18-57%, by mass, calculated as metal oxide, and the Group VIII metal is present in an amount of 2-20%, preferably 3-18%, by mass, calculated as metal oxide, based on the total weight of the unsupported catalyst.

According to an embodiment of the present application, the hydrogenation catalytic component having desulfurization activity can be easily obtained by those skilled in the art. As a specific embodiment, the supported catalyst is prepared by, for example, subjecting the carrier to extrusion molding, drying and calcining, then to impregnationg with the hydrogenation active component, and further to drying and calcining to obtain the hydrogenation catalytic component having desulfurization activity. As a more specific embodiment, the extrusion molding is carried out by blending the carrier with a peptizer, an extrusion assistant, and the like, mixing uniformly, and extruding the mixture on a screw extruder, preferably to obtain a bar with a circular, oval, clover or four-leaf clover cross section, or spherical particles obtained by rolling ball method, oil-drop molding method, and the like. The impregnation is preferably isovolumetric impregnation, in which the extruded carrier is impregnated with a stable salt solution of the hydrogenation active component through isovolumetric impregnation. For example, in the above preparation process, both of the two drying are carried out at 70-150 °C for 1-24 hours, and both of the two calcining are carried out at 300-600 °C for 1-10 hours. In addition, the unsupported catalyst is a homogeneous catalyst prepared by methods including, but not limited to, co-precipitation method from the hydrogenation active component and the binder component.

According to an embodiment of the present application, it also relates to a catalyst bed, particularly a fixed bed. According to the present application, the catalyst bed comprises the liquid-phase hydrogenation catalyst composition of the present application. For example, the catalyst bed may be formed by packing with the liquid-phase hydrogenation catalyst composition of the present application. The packing method is not particularly limited in the present application, and any method known in the art may be used.

According to an embodiment of the present application, as a packing structure of the catalyst bed, the hydrogenation catalytic component having desulfurization activity and the sulfur-adsorbing component may also be present in a substantially uniformly mixed form.

According to an embodiment of the present application, it is more preferable that, as the packing structure of the catalyst bed, the hydrogenation catalytic component having desulfurization activity forms at least one sub-catalyst bed A in the material flow direction, the sulfur-adsorbing component forms at least one sub-catalyst bed B in the material flow direction, and the sub-catalyst bed(s) A and the sub-catalyst bed(s) B are adjacent to each other in an alternative manner. In addition, the at least one sub-catalyst bed A is preferably formed in a columnar shape, and the at least one sub-catalyst bed B is also preferably formed in a columnar shape.

According to the present application, the two components can be packed adjacent to one another in an alternative manner in the reactor in such a way that the same component is packed into a columnar reaction cell in the material flow direction while the two different components are packed in two adjacent columnar reaction cells as viewed in the radial direction. The cross section of each columnar reaction cell may be of any shape, and specifically may be of a rectangle, circle, triangle, parallelogram, or ring shape, an approximate shape thereof, or any other irregular shape. Moreover, the cross sections of the columnar reaction cells in the same reactor can be the same or different.

According to the present application, as can be understood by those skilled in the art, the sulfur-adsorbing component has a smaller average pore diameter and a larger specific surface area as compared to the hydrogenation catalyst having desulfurization activity, and therefore shows a relatively stronger adsorption capacity for hydrogen sulfide, and such adsorption is a temporary physical adsorption, the adsorbed hydrogen sulfide can be washed away by the flow of the liquid material, so that adsorption vacancies are restored on the sulfur-adsorbing component for adsorption of hydrogen sulfide in subsequent material. Thus, with the flow of the liquid material, the hydrogen sulfide is adsorbed and desorbed on the sulfur-adsorbing component continuously to obtain a dynamic balance, so as to achieve a concentrated adsorption of hydrogen sulfide in the liquid material. Therefore, in the material flow direction, the hydrogen sulfide in the material is more intensively distributed in the columnar reaction cell packed with the sulfur-adsorbing component, so that the concentration of hydrogen sulfide in the columnar reaction cell packed with the hydrogenation catalyst having desulfurization activity is reduced, and thereby the influence of hydrogen sulfide on the hydrogenation catalyst can be reduced, and a better hydrogenation effect can be achieved by means of the above grading loading. Based on the above principle, to obtain a better hydrogenation effect, the columnar reaction cell packed with the sulfur-adsorbing component should have a hydrogen sulfide adsorption capacity matched with the adjacent columnar reaction cell packed with the hydrogenation catalyst having desulfurization activity. In addition to the hydrogen sulfide adsorption capacity of the sulfur-adsorbing component, the larger the contact area of the above-mentioned adjacent columnar reaction cells the better, and the smaller the volume of each columnar reaction cell the better. In order to reduce the difficulty of the packing work and at the same time ensure a better hydrogenation effect than the prior art, according to an embodiment of the present application, the shortest distance from any point on the cross section of the columnar reaction cell of the hydrogenation catalyst having desulfurization activity to the edge of the cross section of the adjacent columnar reaction cell of the sulfur-adsorbing component, on the same radial cross section of the reactor, is not more than 500 mm, preferably not more than 300 mm, more preferably not more than 200 mm, further preferably not more than 100 mm, and most preferably not more than 50 mm.

According to an embodiment of the present application, in order to reduce the difficulty of the packing work and at the same time to secure a better hydrogenation effect than the prior art, the straight-line distance, on any cross section of the catalyst bed, from the center point of the cross section of any one of the sub-catalyst beds A to the center point of the cross section of any one of the sub-catalyst beds B adjacent thereto is not more than 500 mm, preferably not more than 200 mm.

According to an embodiment of the present application, on any cross section of the catalyst bed, the area of the cross section of said sub-catalyst bed A and the area of the cross section of said sub-catalyst bed B are equal to or different from each other, each independently being not more than 300000 mm², preferably not more than 100000 mm².

According to an embodiment of the present application, on any cross section of the catalyst bed, the shortest distance from any point on the cross section of any one of the sub-catalyst beds A to the edge of the cross section of any one of the sub-catalyst beds B adjacent thereto is not more than 500 mm, preferably not more than 300 mm, more preferably not more than 200 mm, further preferably not more than 100 mm, most preferably not more than 50 mm.

According to an embodiment of the present application, the hydrogenation catalytic component having desulfurization activity accounts for 35-90%, preferably 45-80%, more preferably 50-75% of the total volume of the catalyst bed. Further, the sulfur-adsorbing component accounts for 10-65%, preferably 20-55%, more preferably 25-50%.

According to an embodiment of the present application, the hydrogenation catalytic component having desulfurization activity is sulfurized, while the sulfur-adsorbing component is sulfurized or not sulfurized. Here, the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr.

According to an embodiment of the present application, it also relates to a hydrogenation process, particularly to a liquid-phase fixed bed hydrogenation process. Here, the hydrogenation process comprises a step of bringing the liquid-phase hydrogenation catalyst composition of the present application or the catalyst bed of the present application into contact with an oil under liquid-phase hydrogenation conditions to conduct a hydrogenation reaction (referred to as a hydrogenation step).

According to an embodiment of the present application, the oil is at least one selected from the group consisting of gasoline, kerosene, diesel oil, wax oil, residual oil, and coal tar, preferably at least one selected from the group consisting of diesel oil, wax oil, and residual oil.

According to an embodiment of the present application, the oil has a sulfur content (calculated as hydrogen sulfide) of 0.01-3.0 wt.%, preferably 0.01-2.0 wt.%.

According to an embodiment of the present application, the liquid-phase hydrogenation conditions include: a reaction temperature of 100-500 °C (preferably 100-450 °C), a reaction pressure of 1-20 MPaG (preferably 2-15 MPaG), a liquid hourly space velocity of 1-10 h⁻¹ (preferably 2-10 h⁻¹, more preferably 2-8 h⁻¹), and a (dissolved) hydrogen content of the oil of 0.01-0.35 wt% (preferably 0.05-0.25 wt%).

According to an embodiment of the present application, the hydrogenation process further comprises a step of sulfurizing the liquid-phase hydrogenation catalyst composition or the catalyst bed prior to the hydrogenation step. Here, the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr.

According to the present application, the sulfur-adsorbing component does not have to be subjected to a sulfurization treatment, and, due to the low content of active metal in the sulfur-adsorbing component, it can be sulfurized in situ in the initial stage of the liquid-phase hydrogenation by the hydrogen sulfide generated in the liquid-phase hydrogenation reaction system, so that hydrogenation activity can be obtained while consuming hydrogen sulfide, and coke formation in subsequent reactions can be avoided. Therefore, the hydrogenation catalytic component having desulfurization activity may be first sulfurized and then mixed with the sulfur-adsorbing component for packing, or the two components may be mixed and then sulfurized together and then used in liquid-phase hydrogenation.

### Examples

The present application will be further illustrated in detail with reference to the following examples and comparative examples, but the present application is not limited to those examples. In the following examples and comparative examples, the average pore diameter and the specific surface area were measured using an ASAP2400 adsorber.

In Examples 1 to 7, hydrogenation catalytic components D1 to D7 having desulfurization activity were prepared.

### Example 1

Preparation of a hydrogenation catalytic component D1 having desulfurization activity:
1000 g of macroporous aluminum hydroxide was taken, and nitric acid and water were added thereto, to obtain a pasty mixture with HNO₃ content of 2.2% and water content of 65%. The mixture was extruded on a screw extruder to obtain clover-shaped bars with a diameter of 1.5 mm, the clover-shaped bars were dried at 100 °C for 2 hours, then calcined at 600 °C for 5 hours to obtain a carrier. Ammonium heptamolybdate and nickel nitrate were formulated into an aqueous solution, the carrier was subjected to isovolumetric impregnation with the aqueous solution for 30 minutes to obtain wet bars with molybdenum oxide of 24% and nickel oxide of 4% (calculated on dry basis after calcining), the wet bars were dried at 100 °C for 2 hours, and then calcined at 550 °C for 2 hours to obtain a catalyst D1.

According to the measurement, the catalyst D1 has an average pore diameter of 9.5 nm, a specific surface area of 268.9 m²/g, a particle size of 2 mm, a hydrogen sulfide retention time of 55.3 min, a hydrogenation active metal of Mo and Ni, and a total mass content of the hydrogenation active metal of 28 wt%.

### Example 2

Preparation of a hydrogenation catalytic component D2 having desulfurization activity:
1000 g of macroporous amorphous silica-alumina was taken, and nitric acid and water were added thereto, to obtain a pasty mixture with HNO₃ content of 2.3% and water content of 68%. The mixture was extruded on a screw extruder to obtain cylindrical bars with a diameter of 1.5 mm, the bars were dried at 80 °C for 18 hours, then calcined at 500 °C for 9 hours to obtain a carrier. Ammonium heptamolybdate and nickel nitrate were formulated into an aqueous solution, the carrier was subjected to isovolumetric impregnation with the aqueous solution for 30 minutes to obtain wet bars with molybdenum oxide content of 27% and nickel oxide content of 5% (calculated on dry basis after calcining), the wet bars were dried at 100 °C for 2 hours, and then calcined at 500 °C for 9 hours to obtain a catalyst D2.

According to the measurement, the catalyst D2 has an average pore diameter of 9.8 nm, a specific surface area of 253.3 m²/g, a particle size of 1.5 mm, a hydrogen sulfide retention time of 53.2 min, a hydrogenation active metal of Mo and Ni, and a mass content of the hydrogenation active metal of 32 wt%.

### Example 3

Preparation of a hydrogenation catalytic component D3 having desulfurization activity:
1000 g of aluminum hydroxide comprising 0.9% of fluorine was taken, and nitric acid and water were added thereto, to obtain a pasty mixture with HNO₃ content of 1.3% and water content of 60%. The mixture was extruded on a screw extruder to obtain cylindrical bars with a diameter of 1.5 mm, the cylindrical bars were dried for 6 hours at 140 °C, then calcined for 2 hours at 550 °C to obtain a carrier. Ammonium heptamolybdate and cobalt nitrate were formulated into an aqueous solution, the carrier was subjected to isovolumetric impregnation with the aqueous solution for 30 minutes to obtain wet bars with molybdenum oxide content of 16% and cobalt oxide content of 3% (calculated on dry basis after calcining), the wet bars were dried for 2 hours at 100 °C, and then calcined for 3 hours at 500 °C to obtain a catalyst D3.

According to the measurement, the catalyst D3 has an average pore diameter of 10.7 nm, a specific surface area of 211.1 m²/g, a particle size of 1.5 mm, a hydrogen sulfide retention time of 47.1 min, a hydrogenation active metal of Mo and Co, and a mass content of the hydrogenation active metal of 19 wt%.

### Example 4

Preparation of a hydrogenation catalytic component D4 having desulfurization activity:
1000 g of macroporous aluminum hydroxide was taken, and nitric acid and water were added thereto, to obtain a pasty mixture with HNO₃ content of 1.6% and water content of 55%. The mixture was extruded on a screw extruder to obtain cylindrical bars with a diameter of 1.5 mm, the cylindrical bars were dried at 130 °C for 6 hours, then calcined at 500 °C for 3 hours to obtain a carrier. Ammonium metatungstate and nickel nitrate were formulated into an aqueous solution, the carrier was subjected to isovolumetric impregnation with the aqueous solution for 30 minutes to obtain wet bars with tungsten oxide content of 22% and nickel oxide content of 7% (calculated on dry basis after calcining), the wet bars were dried at 100 °C for 2 hours, and then calcined at 500 °C for 7 hours to obtain a catalyst D4.

According to the measurement, the catalyst D4 has an average pore diameter of 9.3 nm, a specific surface area of 259.4 m²/g, a particle size of 2.3 mm, a hydrogen sulfide retention time of 63.4 min, a hydrogenation active metal of W and Ni, and a mass content of the hydrogenation active metal of 29 wt%.

### Example 5

Preparation of a hydrogenation catalytic component D5 having desulfurization activity:
1000 g of macroporous amorphous silica-alumina was taken, and nitric acid and water were added thereto, to obtain a pasty mixture with HNO₃ content of 1.8% and water content of 65%. The mixture was extruded on a screw extruder to obtain cylindrical bars with a diameter of 1.5 mm, the cylindrical bars were dried at 100 °C for 8 hours, then calcined at 600 °C for 9 hours to obtain a carrier. Ammonium heptamolybdate was formulated into an aqueous solution, the carrier was subjected to isovolumetric impregnation with the aqueous solution for 30 minutes to obtain wet bars with molybdenum oxide content of 15% (calculated on dry basis after calcining), the wet bars were dried at 100 °C for 2 hours, and then calcined at 600 °C for 2 hours to obtain the catalyst D5.

According to the measurement, the catalyst D5 has an average pore diameter of 10.3 nm, a specific surface area of 239.1 m²/g, a particle size of 1.5 mm, a hydrogen sulfide retention time of 49 min, a hydrogenation active metal of Mo, and a mass content of the hydrogenation active metal of 15 wt%.

### Example 6

Preparation of a hydrogenation catalytic component D6 having desulfurization activity:
1000 g of aluminum hydroxide comprising 2.3% of zirconia was taken, and nitric acid and water were added thereto, to obtain a pasty mixture with HNO₃ content of 1.1% and water content of 55%. The mixture was extruded on a screw extruder to obtain cylindrical bars with a diameter of 1.7 mm, the cylindrical bars were dried for 3 hours at 100 °C, then calcined for 8 hours at 540 °C to obtain a carrier. Ammonium heptamolybdate and nickel nitrate were formulated into an aqueous solution, the carrier was subjected to isovolumetric impregnation with the aqueous solution for 30 minutes to obtain wet bars with molybdenum oxide content of 24% and nickel oxide content of 4% (calculated on dry basis after calcining), the wet bars were dried for 2 hours at 80 °C, and then calcined for 2 hours at 500 °C to obtain a catalyst D6.

According to the measurement, the catalyst D6 has an average pore diameter of 6.8 nm, a specific surface area of 120.7 m²/g, a particle size of 1.7 mm, a hydrogen sulfide retention time of 79.3 min, a hydrogenation active metal of Mo and Ni, and a mass content of the hydrogenation active metal of 28 wt%.

### Example 7

Preparation of a hydrogenation catalytic component D7 having desulfurization activity:
1000 g of macroporous aluminum hydroxide comprising 0.7% of fluorine was taken, and nitric acid and water were added thereto, to obtain a pasty mixture with HNO₃ content of 1.7% and water content of 58%. The mixture was extruded on a screw extruder to obtain cylindrical bars with a diameter of 1.5 mm, the cylindrical bars were dried at 110 °C for 6 hours, then calcined at 480 °C for 2 hours to obtain a carrier. Ammonium heptamolybdate and cobalt nitrate were formulated into an aqueous solution, the carrier was subjected to isovolumetric impregnation with the aqueous solution for 30 minutes to obtain wet bars with molybdenum oxide content of 16% and cobalt oxide content of 3% (calculated on dry basis after calcining), the wet bars were dried at 130 °C for 2 hours, and then calcined at 520 °C for 3 hours to obtain a catalyst D7.

According to the measurement, the catalyst D7 has an average pore diameter of 19.3 nm, a specific surface area of 168.3 m²/g, a particle size of 1.5 mm, a hydrogen sulfide retention time of 23.7 min, a hydrogenation active metal of Mo and Co, and a mass content of the hydrogenation active metal of 19 wt%.

In Examples 8-18, sulfur-adsorbing components A1-A10 were prepared.

### Example 8

Preparation of sulfur-adsorbing component A1:
1000 g of microporous aluminum hydroxide was taken, and nitric acid and water were added thereto, to obtain a pasty mixture with HNO₃ content of 2% and water content of 70%. The mixture was extruded on a screw extruder to obtain cylindrical bars with a diameter of 2 mm, the bars were dried at 100 °C for 2 hours, and then calcined at 550 °C for 5 hours to obtain a carrier. Nickel nitrate was formulated into an aqueous solution, the carrier was subjected to isovolumetric impregnation with the aqueous solution for 30 minutes to obtain wet bars with nickel oxide content of 2.3% (calculated on dry basis after calcining), the wet bars were dried at 100 °C for 2 hours, and calcined at 550 °C for 2 hours to obtain the sulfur-adsorbing component A1.

According to the measurement, the sulfur-adsorbing component A1 has an average pore diameter of 4.7 nm, a specific surface area of 427.9 m²/g, a particle size of 2 mm, a hydrogen sulfide retention time of 200.9 min, a hydrogenation active metal of Ni, a mass content of the hydrogenation active metal of 2.3 wt%, and a sulfur content of 0 wt%.

### Example 9

Preparation of sulfur-adsorbing component A2:
1000 g of microporous amorphous silica-alumina was taken, and nitric acid and water were added thereto, to obtain a pasty mixture with HNO₃ content of 1.1% and water content of 63%. The mixture was extruded on a screw extruder to obtain cylindrical bars with a diameter of 2 mm, the cylindrical bars were dried at 70 °C for 20 hours, and then calcined at 580 °C for 9 hours to obtain a carrier. Ferric nitrate was formulated into an aqueous solution, the carrier was subjected to isovolumetric impregnation with the aqueous solution for 30 minutes to obtain wet bars with ferric oxide content of 4% (calculated on dry basis after calcining), the wet bars were dried at 100 °C for 2 hours, and calcined at 580 °C for 8 hours to obtain the sulfur-adsorbing component A2.

According to the measurement, the sulfur-adsorbing component A2 has an average pore diameter of 5.6 nm, a specific surface area of 310.9 m²/g, a particle size of 3.6 mm, a hydrogen sulfide retention time of 182.1 min, a hydrogenation active metal of Fe, a mass content of the hydrogenation active metal of 4 wt%, and a sulfur content of 0 wt%.

### Example 10

Preparation of sulfur-adsorbing component A3:
1000 g of aluminum hydroxide comprising 5% of magnesia was taken, and nitric acid and water were added thereto, to obtain a pasty mixture with HNO₃ content of 1.8% and water content of 60%. The mixture was extruded on a screw extruder to obtain cylindrical bars with a diameter of 2 mm, the bars were dried at 140 °C for 3 hours, and then calcined at 400 °C for 2 hours to obtain a carrier. Cobalt nitrate was formulated into an aqueous solution, the carrier was subjected to isovolumetric impregnation with the aqueous solution for 30 minutes to obtain wet bars with cobalt oxide content of 1.9% (based on the dry basis after calcining), the wet bars were dried for 2 hours at 100 °C, and then calcined for 5 hours at 400 °C to obtain the sulfur-adsorbing component A3.

According to the measurement, the sulfur-adsorbing component A3 has an average pore diameter of 3.7 nm, a specific surface area of 309.3 m²/g, a particle size of 4.3 mm, a hydrogen sulfide retention time of 197.5 min, a hydrogenation active metal of Co, a mass content of the hydrogenation active metal of 1.9 wt%, and a sulfur content of 0 wt%.

### Example 11

Preparation of sulfur-adsorbing component A4:
1000 g of microporous aluminum hydroxide comprising 3% of silica was taken, and nitric acid and water were added thereto, to obtain a pasty mixture with HNO₃ content of 2.8% and water content of 50%. The mixture was extruded on a screw extruder to obtain cylindrical bars with a diameter of 2 mm, the bars were dried at 130 °C for 6 hours, and then calcined at 490 °C for 7 hours to obtain a carrier. Zinc nitrate was formulated into an aqueous solution, the carrier was subjected to isovolumetric impregnation with the aqueous solution for 30 minutes to obtain wet bars with zinc oxide content of 0.8% (calculated on dry basis after calcining), the wet bars were dried at 100 °C for 2 hours, and calcined at 490 °C for 6 hours to obtain the sulfur-adsorbing component A4.

According to the measurement, the sulfur-adsorbing component A4 has an average pore diameter of 7.3 nm, a specific surface area of 330.5 m²/g, a particle size of 2.6 mm, a hydrogen sulfide retention time of 156.3 min, a hydrogenation active metal of Zn, a mass content of the hydrogenation active metal of 0.8 wt%, and a sulfur content of 0 wt%.

### Example 12

Preparation of sulfur-adsorbing component A5:
1000 g of microporous aluminum hydroxide was taken, and nitric acid and water were added thereto, to obtain a pasty mixture with HNO₃ content of 2.5% and water content of 68%. The mixture was extruded on a screw extruder to obtain cylindrical bars with a diameter of 2 mm, the bars were dried at 80 °C for 24 hours, and then calcined at 650 °C for 6 hours to obtain a carrier. Ferric nitrate was formulated into an aqueous solution, the carrier was subjected to isovolumetric impregnation with the aqueous solution for 30 minutes to obtain wet bars with ferric oxide content of 1.9% (calculated on dry basis after calcining), the wet bars were dried at 110 °C for 5 hours, and calcined at 650 °C for 4 hours to obtain the sulfur-adsorbing component A5.

According to the measurement, the sulfur-adsorbing component A5 has an average pore diameter of 4.3 nm, a specific surface area of 355.1 m²/g, a particle size of 2.4 mm, a hydrogen sulfide retention time of 205.3 min, a hydrogenation active metal of Fe, a mass content of the hydrogenation active metal of 1.9 wt%, and a sulfur content of 0 wt%.

### Example 13

Preparation of sulfur-adsorbing component A6:
1000 g of microporous aluminum hydroxide was taken, and nitric acid and water were added thereto, to obtain a pasty mixture with HNO₃ content of 1.7% and water content of 63%. The mixture was extruded on a screw extruder to obtain cylindrical bars with a diameter of 2 mm, the bars were dried at 110 °C for 4 hours, and then calcined at 500 °C for 5 hours to obtain a carrier. Nickel nitrate was formulated into an aqueous solution, the carrier was subjected to isovolumetric impregnation with the aqueous solution for 30 minutes to obtain wet bars with nickel oxide content of 10% (calculated on dry basis after calcining), the wet bars were dried at 80 °C for 8 hours, and calcined at 500 °C for 3 hours to obtain the sulfur-adsorbing component A6.

According to the measurement, the sulfur-adsorbing component A6 has an average pore diameter of 5.1 nm, a specific surface area of 364.7 m²/g, a particle size of 1.5 mm, a hydrogen sulfide retention time of 190.7 min, a hydrogenation active metal of Ni, a mass content of the hydrogenation active metal of 10 wt%, and a sulfur content of 0 wt%.

### Example 14

Preparation of sulfur-adsorbing component A7:
1000 g of macroporous aluminum hydroxide was taken, and nitric acid and water were added thereto, to obtain a pasty mixture with HNO₃ content of 1.9% and water content of 57%. The mixture was extruded on a screw extruder to obtain cylindrical bars with a diameter of 2 mm, the cylindrical bars were dried at 70 °C for 20 hours, and then calcined at 700 °C for 7 hours to obtain a carrier. Ferric nitrate was formulated into an aqueous solution, the carrier was subjected to isovolumetric impregnation with the aqueous solution for 30 minutes to obtain wet bars with ferric oxide content of 5.6% (calculated on dry basis after calcining), the wet bars were dried at 100 °C for 5 hours, and calcined at 700 °C for 4 hours to obtain the sulfur-adsorbing component A7.

According to the measurement, the sulfur-adsorbing component A7 has an average pore diameter of 7.6 nm, a specific surface area of 306.5 m²/g, a particle size of 2 mm, a hydrogen sulfide retention time of 132.8 min, a hydrogenation active metal of Fe, a mass content of the hydrogenation active metal of 5.6 wt%, and a sulfur content of 0 wt%.

### Example 15

Preparation of sulfur-adsorbing component A8:
1000 g of microporous amorphous silica-alumina was taken, and nitric acid and water were added thereto, to obtain a pasty mixture with HNO₃ content of 2.1% and water content of 66%. The mixture was extruded on a screw extruder to obtain cylindrical bars with a diameter of 2 mm, the cylindrical bars were dried at 100 °C for 24 hours, and then calcined at 500 °C for 6 hours to obtain a carrier. Zinc nitrate was formulated into an aqueous solution, the carrier was subjected to isovolumetric impregnation with the aqueous solution for 30 minutes to obtain wet bars with zinc oxide content of 1.1% (calculated on dry basis after calcining), the wet bars were dried at 110 °C for 5 hours, and calcined at 500 °C for 1 hour to obtain the sulfur-adsorbing component A8.

According to the measurement, the sulfur-adsorbing component A8 has an average pore diameter of 5.5 nm, a specific surface area of 298.7 m²/g, a particle size of 2 mm, a hydrogen sulfide retention time of 153.1 min, a hydrogenation active metal of Zn, a mass content of the hydrogenation active metal of 1.1 wt%, and a sulfur content of 0 wt%.

### Example 16

Preparation of sulfur-adsorbing component A9:
1000 g of microporous aluminum hydroxide comprising 2.5% of silica was taken, and nitric acid and water were added thereto, to obtain a pasty mixture with HNO₃ content of 2.5% and water content of 75%. The mixture was extruded on a screw extruder to obtain cylindrical bars with a diameter of 2 mm, the bars were dried at 120 °C for 8 hours, and then calcined at 710 °C for 4 hours to obtain a carrier. Nickel nitrate was formulated into an aqueous solution, the carrier was subjected to isovolumetric impregnation with the aqueous solution for 30 minutes to obtain wet bars with nickel oxide content of 2.0% (calculated on dry basis after calcining), the wet bars were dried at 100 °C for 3 hours, and calcined at 600 °C for 2 hours to obtain the sulfur-adsorbing component A9.

According to the measurement, the sulfur-adsorbing component A9 has an average pore diameter of 5.4 nm, a specific surface area of 342.1 m²/g, a particle size of 2.0 mm, a hydrogen sulfide retention time of 187.7 min, a hydrogenation active metal of Ni, a mass content of the hydrogenation active metal of 2 wt%, and a sulfur content of 0 wt%.

### Example 17

Preparation of sulfurized sulfur-adsorbing component A9:
The sulfur-adsorbing component A9 obtained in Example 16 was subjected to dry sulfurization, in which the reactor packed with A9 was filled with hydrogen gas, 2% by volume of hydrogen sulfide was introduced, the pressure was raised to 3.0 MPa, the temperature was raised to 310 °C, the sulfurization was carried out at constant temperature for 30 min, and then the reactor was carefully discharged under the protection of nitrogen.

According to the measurement, the sulfurized sulfur-adsorbing component A9 has an average pore diameter of 5.3 nm, a specific surface area of 322.7 m²/g, a particle size of 2 mm, a hydrogen sulfide retention time of 193.3 min, a hydrogenation active metal of Ni, a mass content of the hydrogenation active metal of 2 wt%, and a sulfur content of 0.97 wt%.

### Example 18

Preparation of sulfur-adsorbing component A10:
1000 g of microporous aluminum hydroxide comprising 3% of zirconia was taken, and nitric acid and water were added thereto, to obtain a paste mixture with HNO₃ content of 2.1% and water content of 70%. The mixture was extruded on a screw extruder to obtain cylindrical bars with a diameter of 2 mm, the bars were dried at 80 °C for 8 hours, and then calcined at 520 °C for 8 hours to obtain a carrier. Nickel nitrate was formulated into an aqueous solution, the carrier was subjected to isovolumetric impregnation with the aqueous solution for 30 minutes to obtain wet bars with nickel oxide content of 0.005% (calculated on a dried basis after calcining), the wet bars were dried at 120 °C for 2 hours, and calcined at 520 °C for 4 hours to obtain the sulfur-adsorbing component A10.

According to the measurement, the sulfur-adsorbing component A10 has an average pore diameter of 4.5 nm, a specific surface area of 314.7 m²/g, a particle size of 2 mm, a hydrogen sulfide retention time of 175.9 min, a hydrogenation active metal of Ni, a mass content of the hydrogenation active metal of 0.005 wt%, and a sulfur content of 0 wt%.

In Comparative Examples 1 to 6, sulfur-adsorbing components A11 to A16 were prepared.

### Comparative Example 1

Preparation of sulfur-adsorbing component A11:
1000 g of macroporous aluminum hydroxide was taken, and nitric acid and water were added thereto, to obtain a pasty mixture with HNO₃ content of 1.5% and water content of 62%. The mixture was extruded on a screw extruder to obtain cylindrical bars with a diameter of 2 mm, the cylindrical bars were dried at 100 °C for 2 hours, and then calcined at 1000 °C for 6 hours to obtain a carrier. Nickel nitrate was formulated into an aqueous solution, the carrier was subjected to isovolumetric impregnation with the aqueous solution for 30 minutes to obtain wet bars with nickel oxide content of 3% (calculated on dry basis after calcining), the wet bars were dried at 100 °C for 2 hours, and calcined at 500 °C for 2 hours to obtain the sulfur-adsorbing component A11.

According to the measurement, the sulfur-adsorbing component A11 has an average pore diameter of 15.3 nm, a specific surface area of 217.6 m²/g, a particle size of 2.1 mm, a hydrogen sulfide retention time of 98.3 min, a hydrogenation active metal of Ni, a mass content of the hydrogenation active metal of 3 wt%, and a sulfur content of 0 wt%.

### Comparative Example 2

Preparation of sulfur-adsorbing component A12:
1000 g of microporous amorphous silica-alumina was taken, and nitric acid and water were added thereto, to obtain a pasty mixture with HNO₃ content of 3.1% and water content of 50%. The mixture was extruded on a screw extruder to obtain cylindrical bars with a diameter of 2 mm, and the cylindrical bars were dried at 80 °C for 24 hours and then calcined at 550 °C for 5 hours to obtain a carrier. Ferric nitrate was formulated into an aqueous solution, the carrier was subjected to isovolumetric impregnation with the aqueous solution for 30 minutes to obtain wet bars with ferric oxide content of 1.9% (calculated on dry basis after calcining), the wet bars were dried at 100 °C for 5 hours, and calcined at 550 °C for 5 hours to obtain the catalyst A12.

According to the measurement, the sulfur-adsorbing component A12 has an average pore diameter of 1.8 nm, a specific surface area of 310.3 m²/g, a particle size of 2.4 mm, a hydrogen sulfide retention time of 179.8 min, a hydrogenation active metal of Fe, a mass content of the hydrogenation active metal of 1.9 wt%, and a sulfur content of 0 wt%.

### Comparative Example 3

Preparation of sulfur-adsorbing component A13:
1000 g of microporous aluminum hydroxide was taken, and nitric acid and water were added thereto, to obtain a pasty mixture with HNO₃ content of 2.3% and water content of 74%. The mixture was extruded on a screw extruder to obtain cylindrical bars with a diameter of 2 mm, the bars were dried at 90 °C for 3 hours, and then calcined at 890 °C for 5 hours to obtain a carrier. Nickel nitrate was formulated into an aqueous solution, the carrier was subjected to isovolumetric impregnation with the aqueous solution for 30 minutes to obtain wet bars with the nickel oxide content of 3% (calculated on dry basis after calcining), the wet bars were dried at 90 °C for 3 hours, and calcined at 600 °C for 2 hours to obtain the catalyst A13.

According to the measurement, the sulfur-adsorbing component A13 has an average pore diameter of 3.8 nm, a specific surface area of 510.6 m²/g, a particle size of 2.2 mm, a hydrogen sulfide retention time of 207.1 min, a hydrogenation active metal of Ni, a mass content of the hydrogenation active metal of 3 wt%, and a sulfur content of 0 wt%.

### Comparative Example 4

Preparation of sulfur-adsorbing component A14:
1000 g of microporous amorphous silica-alumina was taken, and nitric acid and water were added thereto, to obtain a pasty mixture with HNO₃ content of 3.2% and water content of 52%. The mixture was extruded on a screw extruder to obtain cylindrical bars with a diameter of 2 mm, the bars were dried at 75 °C for 14 hours, then calcined at 450 °C for 6 hours to obtain a carrier. Nickel nitrate was formulated into an aqueous solution, the carrier was subjected to isovolumetric impregnation with the aqueous solution for 30 minutes to obtain wet bars with nickel oxide content of 2.3% (calculated on dry basis after calcining), the wet bars were dried at 75 °C for 2 hours, and then calcining at 450 °C for 5 hours to obtain the sulfur-adsorbing component A14.

According to the measurement, the sulfur-adsorbing component A14 has an average pore diameter of 5.2 nm, a specific surface area of 183.2 m²/g, a particle size of 2.6 mm, a hydrogen sulfide retention time of 41.7 min, a hydrogenation active metal of Ni, and a mass content of the hydrogenation active metal of 2.3 wt%.

### Comparative Example 5

Preparation of sulfur-adsorbing component A15:
1000 g of microporous aluminum hydroxide comprising 3.5% of titania was taken, and nitric acid and water were added thereto, to obtain a pasty mixture with HNO₃ content of 2.8% and water content of 65%. The mixture was extruded on a screw extruder to obtain cylindrical bars with a diameter of 2 mm, and the bars were dried for 12 hours at 85 °C, then calcined for 6 hours at 700 °C to obtain a carrier. The carrier was extruded and dried without impregnating with any hydrogenation active metal, to obtain the sulfur-adsorbing component A15.

According to the measurement, the sulfur-adsorbing component A15 has an average pore diameter of 4.1 nm, a specific surface area of 286.1 m²/g, a particle size of 3.2 mm, a hydrogen sulfide retention time of 171.3 min, a content of the hydrogenation active metal of 0 wt%, and a sulfur content of 0 wt%.

### Comparative Example 6

Preparation of sulfur-adsorbing component A16:
1000 g of aluminum hydroxide comprising 5% of magnesia was taken, and nitric acid and water were added thereto, to obtain a pasty mixture with HNO₃ content of 2.3% and water content of 63%. The mixture was extruded on a screw extruder to obtain cylindrical bars with a diameter of 2 mm, the bars were dried at 120 °C for 4 hours, and then calcined at 450 °C for 5 hours to obtain a carrier. Zinc nitrate, ammonium metatungstate and nickel nitrate were formulated into an aqueous solution, the carrier was subjected to isovolumetric impregnation with the aqueous solution for 30 minutes to obtain wet bars with zinc oxide content of 0.8%, tungsten oxide content of 22% and nickel oxide content of 7% (calculated on dry basis after calcining), the wet bars were dried for 2 hours at 100 °C, and calcined for 5 hours at 450 °C, to obtain the sulfur-adsorbing component A16.

According to the measurement, the sulfur-adsorbing component A16 has an average pore diameter of 2.7 nm, a specific surface area of 301.5 m²/g, a particle size of 2.7 mm, a hydrogen sulfide retention time of 102.1 min, a hydrogenation active metal of Ni, W and Zn, a mass content of the hydrogenation active metal of 29.8 wt%, and a sulfur content of 0 wt%.

At least one of D1-D7 and at least one of A1-A16 were uniformly mixed to obtain a liquid-phase hydrogenation catalyst composition.

### Example 19

D1 was sulfurized as follows:
Dry sulfurization was performed, in which the reactor packed with D1 was filled with hydrogen, 2% by volume of hydrogen sulfide was introduced, the pressure was increased to 3.3MPa, the temperature was raised to 300 °C, the sulfurization was carried out at constant temperature for 8 hours, and then the reactor was carefully discharged under the protection of nitrogen.

The sulfurized D1 was mixed with A1 at a mass ratio of 85: 15 to obtain a catalyst composition Z1.

In this example, the hydrogen sulfide retention time of the sulfur-adsorbing component is 3.6 times that of the hydrogenation catalyst, the average pore diameter of the sulfur-adsorbing component is 49.5% of the average pore diameter of the hydrogenation catalyst, the specific surface area of the sulfur-adsorbing component is 159.1 % of the specific surface area of the hydrogenation catalyst, and the mass content of the hydrogenation active metal in the sulfur-adsorbing component is 8.2% of the mass content of the hydrogenation active component in the hydrogenation catalytic component.

### Example 20

D2 was sulfurized as follows:
Dry sulfurization was performed, in which the reactor packed with D2 was filled with hydrogen, 2% by volume of hydrogen sulfide was introduced, the pressure was increased to 6.3MPa, the temperature was raised to 390 °C, the sulfurization was carried out at constant temperature for 6 hours, and then the reactor was carefully discharged under the protection of nitrogen.

The sulfurized D2 was mixed with A2 at a mass ratio of 88:12 to obtain a catalyst composition Z2.

In this example, the hydrogen sulfide retention time of the sulfur-adsorbing component is 2.4 times that of the hydrogenation catalyst, the average pore diameter of the sulfur-adsorbing component is 57.1% of the average pore diameter of the hydrogenation catalyst, the specific surface area of the sulfur-adsorbing component is 122.8% of the specific surface area of the hydrogenation catalyst, and the mass content of the hydrogenation active metal in the sulfur-adsorbing component is 12.5% of the mass content of the hydrogenation active component in the hydrogenation catalytic component.

### Example 21

D4 was sulfurized as follows:
Dry sulfurization was performed, in which the reactor packed with D4 was filled with hydrogen, 2% by volume of hydrogen sulfide was introduced, the pressure was increased to 5.0 MPa, the temperature was raised to 330 °C, the sulfurization was carried out at constant temperature for 12 hours, and then the reactor was carefully discharged under the protection of nitrogen.

The sulfurized D4 was mixed with A4 at a mass ratio of 76: 24 to obtain a catalyst composition Z3.

In this example, the hydrogen sulfide retention time of the sulfur-adsorbing component is 2.5 times that of the hydrogenation catalyst, the average pore diameter of the sulfur-adsorbing component is 78.5% of the average pore diameter of the hydrogenation catalyst, the specific surface area of the sulfur-adsorbing component is 127.4% of the specific surface area of the hydrogenation catalyst, and the mass content of the hydrogenation active metal in the sulfur-adsorbing component is 2.8% of the mass content of the hydrogenation active component in the hydrogenation catalytic component.

### Example 22

D3 was sulfurized as follows:
Dry sulfurization was performed, in which the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 was mixed with A3 at a mass ratio of 78: 22 to obtain a catalyst composition Z4.

In this example, the hydrogen sulfide retention time of the sulfur-adsorbing component is 4.2 times that of the hydrogenation catalyst, the average pore diameter of the sulfur-adsorbing component is 34.6% of the average pore diameter of the hydrogenation catalyst, the specific surface area of the sulfur-adsorbing component is 146.5% of the specific surface area of the hydrogenation catalyst, and the mass content of the hydrogenation active metal in the sulfur-adsorbing component is 10.0% of the mass content of the hydrogenation active component in the hydrogenation catalytic component.

### Example 23

D2 was sulfurized as follows:
Dry sulfurization was performed, in which the reactor packed with D2 was filled with hydrogen, 2% by volume of hydrogen sulfide was introduced, the pressure was increased to 6.3MPa, the temperature was raised to 390 °C, the sulfurization was carried out at constant temperature for 6 hours, and then the reactor was carefully discharged under the protection of nitrogen.

The sulfurized D2 was mixed with A5 at a mass ratio of 78: 22 to obtain a catalyst composition Z5.

In this example, the hydrogen sulfide retention time of the sulfur-adsorbing component is 3.9 times that of the hydrogenation catalyst, the average pore diameter of the sulfur-adsorbing component is 43.9% of the average pore diameter of the hydrogenation catalyst, the specific surface area of the sulfur-adsorbing component is 140.2% of the specific surface area of the hydrogenation catalyst, and the mass content of the hydrogenation active metal in the sulfur-adsorbing component is 5.9% of the mass content of the hydrogenation active component in the hydrogenation catalytic component.

### Example 24

D3 was sulfurized as follows:
Dry sulfurization was performed, in which the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 was mixed with A5 at a mass ratio of 78: 22 to obtain a catalyst composition Z6.

In this example, the hydrogen sulfide retention time of the sulfur-adsorbing component is 4.4 times that of the hydrogenation catalyst, the average pore diameter of the sulfur-adsorbing component is 40.2% of the average pore diameter of the hydrogenation catalyst, the specific surface area of the sulfur-adsorbing component is 168.2% of the specific surface area of the hydrogenation catalyst, and the mass content of the hydrogenation active metal in the sulfur-adsorbing component is 10.0% of the mass content of the hydrogenation active component in the hydrogenation catalytic component.

### Example 25

D3 was sulfurized as follows:
Dry sulfurization was performed, in which the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 was mixed with A6 at a mass ratio of 78: 22 to obtain a catalyst composition Z7.

In this example, the hydrogen sulfide retention time of the sulfur-adsorbing component is 4.0 times that of the hydrogenation catalyst, the average pore diameter of the sulfur-adsorbing component is 47.7% of the average pore diameter of the hydrogenation catalyst, the specific surface area of the sulfur-adsorbing component is 172.8% of the specific surface area of the hydrogenation catalyst, and the mass content of the hydrogenation active metal in the sulfur-adsorbing component is 52.6% of the mass content of the hydrogenation active component in the hydrogenation catalytic component.

### Example 26

D3 was sulfurized as follows:
Dry sulfurization was performed, in which the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 was mixed with A7 at a mass ratio of 85: 15 to obtain a catalyst composition Z8.

In this example, the hydrogen sulfide retention time of the sulfur-adsorbing component is 2.8 times that of the hydrogenation catalyst, the average pore diameter of the sulfur-adsorbing component is 71.0% of the average pore diameter of the hydrogenation catalyst, the specific surface area of the sulfur-adsorbing component is 145.2% of the specific surface area of the hydrogenation catalyst, and the mass content of the hydrogenation active metal in the sulfur-adsorbing component is 29.5% of the mass content of the hydrogenation active component in the hydrogenation catalytic component.

### Example 27

D4 was sulfurized as follows:
Dry sulfurization was performed, in which the reactor packed with D4 was filled with hydrogen, 2% by volume of hydrogen sulfide was introduced, the pressure was increased to 5.0 MPa, the temperature was raised to 330 °C, the sulfurization was carried out at constant temperature for 12 hours, and then the reactor was carefully discharged under the protection of nitrogen.

The sulfurized D4 was mixed with A8 at a mass ratio of 76: 24 to obtain a catalyst composition Z9.

In this example, the hydrogen sulfide retention time of the sulfur-adsorbing component is 2.4 times that of the hydrogenation catalyst, the average pore diameter of the sulfur-adsorbing component is 59.1% of the average pore diameter of the hydrogenation catalyst, the specific surface area of the sulfur-adsorbing component is 115.2% of the specific surface area of the hydrogenation catalyst, and the mass content of the hydrogenation active metal in the sulfur-adsorbing component is 3.8% of the mass content of the hydrogenation active component in the hydrogenation catalytic component.

### Example 28

D3 was sulfurized as follows:
Dry sulfurization was performed, the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 was mixed with A1 at a mass ratio of 78: 22 to obtain a catalyst composition Z10.

In this example, the hydrogen sulfide retention time of the sulfur-adsorbing component is 4.3 times that of the hydrogenation catalyst, the average pore diameter of the sulfur-adsorbing component is 43.9% of the average pore diameter of the hydrogenation catalyst, the specific surface area of the sulfur-adsorbing component is 202.7% of the specific surface area of the hydrogenation catalyst, and the mass content of the hydrogenation active metal in the sulfur-adsorbing component is 12.1% of the mass content of the hydrogenation active component in the hydrogenation catalytic component.

### Example 29

The oxidized D3 was mixed with A2 at a mass ratio of 68: 32 to obtain a catalyst composition Z11.

The catalyst composition Z11 was subjected to a sulfurization treatment in the reactor before carrying out the hydrogenation reaction. Wet sulfurization was performed, in which a diesel oil feedstock and hydrogen were introduced into the reactor, and the pressure was increased to 4.0 MPa. The temperature was raised to 160 °C, and then a sulfurizing agent carbon disulfide was introduced in an amount of 10 wt%, based on the total weight of the catalyst. The temperature was further raised to 300 °C, the sulfurization was carried out at constant temperature for 19 hours, and the resultant was cooled to room temperature for further experiment.

In this example, the hydrogen sulfide retention time of the sulfur-adsorbing component is 3.9 times that of the hydrogenation catalyst, the average pore diameter of the sulfur-adsorbing component is 52.3% of the average pore diameter of the hydrogenation catalyst, the specific surface area of the sulfur-adsorbing component is 147.3% of the specific surface area of the hydrogenation catalyst, and the mass content of the hydrogenation active metal in the sulfur-adsorbing component is 21.1% of the mass content of the hydrogenation active component in the hydrogenation catalytic component.

### Example 30

D3 was sulfurized as follows:
Dry sulfurization was performed, in which the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 was mixed with A9 at a mass ratio of 88: 12 to obtain a catalyst composition Z12.

In this example, the hydrogen sulfide retention time of the sulfur-adsorbing component is 4.0 times that of the hydrogenation catalyst, the average pore diameter of the sulfur-adsorbing component is 50.5% of the average pore diameter of the hydrogenation catalyst, the specific surface area of the sulfur-adsorbing component is 162.1 % of the specific surface area of the hydrogenation catalyst, and the mass content of the hydrogenation active metal in the sulfur-adsorbing component is 10.5% of the mass content of the hydrogenation active component in the hydrogenation catalytic component.

### Example 31

D3 was sulfurized as follows:
Dry sulfurization was performed, in which the reactor packed with D3 was filled with hydrogen, 2% by volume of hydrogen sulfide was introduced, the pressure was increased to 5.3 MPa, the temperature was raised to 340 °C, the sulfurization was carried out at constant temperature for 7 hours, and then the reactor was carefully discharged under the protection of nitrogen.

The sulfurized D3 and the sulfurized A9 were mixed at a mass ratio of 88: 12 to obtain a catalyst composition Z13.

In this example, the hydrogen sulfide retention time of the sulfur-adsorbing component is 4.1 times that of the hydrogenation catalyst, the average pore diameter of the sulfur-adsorbing component is 49.5% of the average pore diameter of the hydrogenation catalyst, the specific surface area of the sulfur-adsorbing component is 152.9% of the specific surface area of the hydrogenation catalyst, and the mass content of the hydrogenation active metal in the sulfur-adsorbing component is 10.5% of the mass content of the hydrogenation active component in the hydrogenation catalytic component.

### Comparative Example 7

D7 was sulfurized as follows:
Dry sulfurization was performed, in which the reactor packed with D7 was filled with hydrogen, 2% by volume of hydrogen sulfide was introduced, the pressure was increased to 5.0 MPa, raising the temperature to 330 °C, the sulfurization was carried out at constant temperature for 12 hours, and then the reactor was carefully discharged under the protection of nitrogen.

The sulfurized D7 was mixed with A11 at a mass ratio of 78: 22 to obtain a catalyst composition Z14.

In this example, the hydrogen sulfide retention time of the sulfur-adsorbing component is 4.1 times that of the hydrogenation catalyst, the average pore diameter of the sulfur-adsorbing component is 79.3% of the average pore diameter of the hydrogenation catalyst, the specific surface area of the sulfur-adsorbing component is 129.3% of the specific surface area of the hydrogenation catalyst, and the mass content of the hydrogenation active metal in the sulfur-adsorbing component is 15.8% of the mass content of the hydrogenation active component in the hydrogenation catalytic component.

### Comparative Example 8

D3 was sulfurized as follows:
Dry sulfurization was performed, in which the reactor packed with D3 was filled with hydrogen, 2% by volume of hydrogen sulfide was introduced, the pressure was increased to 5.0 MPa, the temperature was raised to 330 °C, the sulfurization was carried out at constant temperature for 12 hours, and then the reactor was carefully discharged under the protection of nitrogen.

The sulfurized D3 was mixed with A12 at a mass ratio of 78: 22 to obtain a catalyst composition Z15.

In this example, the hydrogen sulfide retention time of the sulfur-adsorbing component is 3.8 times that of the hydrogenation catalyst, the average pore diameter of the sulfur-adsorbing component is 16.8% of the average pore diameter of the hydrogenation catalyst, the specific surface area of the sulfur-adsorbing component is 147.0% of the specific surface area of the hydrogenation catalyst, and the mass content of the hydrogenation active metal in the sulfur-adsorbing component is 10.0% of the mass content of the hydrogenation active component in the hydrogenation catalytic component.

### Comparative Example 9

D5 was sulfurized as follows:
Dry sulfurization was performed, in which the reactor packed with D5 was filled with hydrogen, 2% by volume of hydrogen sulfide was introduced, the pressure was increased to 4.5 MPa, the temperature was raised to 310 °C, the sulfurization was carried out at constant temperature for 12 hours, and then the reactor was carefully discharged under the protection of nitrogen.

The sulfurized D5 was mixed with A13 at a mass ratio of 78: 22 to obtain a catalyst composition Z16.

In this example, the hydrogen sulfide retention time of the sulfur-adsorbing component is 4.2 times that of the hydrogenation catalyst, the average pore diameter of the sulfur-adsorbing component is 36.9 times that of the hydrogenation catalyst, the specific surface area of the sulfur-adsorbing component is 213.6% of that of the hydrogenation catalyst, and the mass content of the hydrogenation active metal in the sulfur-adsorbing component is 20% of that of the hydrogenation active component of the hydrogenation catalytic component.

### Comparative Example 10

D6 was sulfurized as follows:
Dry sulfurization was performed, in which the reactor packed with D6 was filled with hydrogen, 2% by volume of hydrogen sulfide was introduced, the pressure was increased to 4.5 MPa, the temperature was raised to 310 °C, the sulfurization was carried out at constant temperature for 12 hours, and then the reactor was carefully discharged under the protection of nitrogen.

The sulfurized D6 was mixed with A14 at a mass ratio of 78: 22 to obtain a catalyst composition Z17.

In this example, the hydrogen sulfide retention time of the sulfur-adsorbing component is 1.5 times that of the hydrogenation catalyst, the average pore diameter of the sulfur-adsorbing component is 76.5% of the average pore diameter of the hydrogenation catalyst, the specific surface area of the sulfur-adsorbing component is 151.8% of the specific surface area of the hydrogenation catalyst, and the mass content of the hydrogenation active metal in the sulfur-adsorbing component is 8.2% of the mass content of the hydrogenation active component in the hydrogenation catalytic component.

### Comparative Example 11

D2 was sulfurized as follows:
Dry sulfurization was performed, in which the reactor packed with D2 was filled with hydrogen, 2% by volume of hydrogen sulfide was introduced, the pressure was increased to 6.3MPa, the temperature was raised to 390 °C, the sulfurization was carried out at constant temperature for 6 hours, and then the reactor was carefully discharged under the protection of nitrogen.

The sulfurized D2 was mixed with A15 at a mass ratio of 89: 11 to obtain a catalyst composition Z18.

In this example, the hydrogen sulfide retention time of the sulfur-adsorbing component is 3.2 times that of the hydrogenation catalyst, the average pore diameter of the sulfur-adsorbing component is 41.8% of the average pore diameter of the hydrogenation catalyst, the specific surface area of the sulfur-adsorbing component is 113% of the specific surface area of the hydrogenation catalyst, and the mass content of the hydrogenation active metal in the sulfur-adsorbing component is 0% of the mass content of the hydrogenation active component in the hydrogenation catalytic component.

### Comparative Example 12

A16 was sulfurized as follows:
Dry sulfurization was performed, in which the reactor packed with A16 was filled with hydrogen, 2% by volume of hydrogen sulfide was introduced, the pressure was increased to 6.8 MPa, the temperature was raised to 330 °C, the sulfurization was carried out at constant temperature for 6 hours, and the reactor was carefully discharged under the protection of nitrogen.

The catalyst system used was only the sulfurized A16.

### Comparative Example 13

D5 was sulfurized as follows:
Dry sulfurization was performed, in which the reactor packed with D5 was filled with hydrogen, 2% by volume of hydrogen sulfide was introduced, the pressure was increased to 4.5 MPa, the temperature was raised to 310 °C, the sulfurization was carried out at constant temperature for 12 hours, and then the reactor was carefully discharged under the protection of nitrogen.

The sulfurized D5 was mixed with A6 at a mass ratio of 78: 22 to obtain a catalyst composition Z19.

In this example, the hydrogen sulfide retention time of the sulfur-adsorbing component is 3.9 times that of the hydrogenation catalyst, the average pore diameter of the sulfur-adsorbing component is 49.5% of the average pore diameter of the hydrogenation catalyst, the specific surface area of the sulfur-adsorbing component is 152.5% of the specific surface area of the hydrogenation catalyst, and the mass content of the hydrogenation active metal in the sulfur-adsorbing component is 66.7% of the mass content of the hydrogenation active component in the hydrogenation catalytic component.

### Comparative Example 14

D3 was sulfurized as follows:
Dry sulfurization was performed, in which the reactor packed with D3 was filled with hydrogen, 2% by volume of hydrogen sulfide was introduced, the pressure was increased to 5.0 MPa, the temperature was raised to 330 °C, the sulfurization was carried out at constant temperature for 12 hours, and then the reactor was carefully discharged under the protection of nitrogen.

The sulfurized D3 was mixed with A10 at a mass ratio of 78: 22 to obtain a catalyst composition Z20.

In this example, the hydrogen sulfide retention time of the sulfur-adsorbing component is 3.7 times that of the hydrogenation catalyst, the average pore diameter of the sulfur-adsorbing component is 42.1% of the average pore diameter of the hydrogenation catalyst, the specific surface area of the sulfur-adsorbing component is 149.1 % of the specific surface area of the hydrogenation catalyst, and the mass content of the hydrogenation active metal in the sulfur-adsorbing component is 0.026% of the mass content of the hydrogenation active component in the hydrogenation catalytic component.

### Comparative Example 15

The catalyst system was prepared using only the desulfurization catalyst component D2, without adding a sulfur-adsorbing component. Catalyst D2 was sulfurized as described in Example 20 to obtain sulfurized D2.

### Example 32

The activity of the catalyst compositions obtained above was evaluated under conditions including: a liquid-phase hydrogenation device, a reaction temperature of 340 °C, a reaction pressure of 6.3MPa, a liquid hourly space velocity of 1.3 h⁻¹, and introduction of hydrogen into the reactor by means of dissolved hydrogen in feedstock oil under 6.3 MPa.

The feedstock oil is the third atmospheric distillation side-draw diesel from a refinery of Sinopec, with a sulfur content of 1.53%, and a nitrogen content of 150 ppm.

The sulfur content of the oil product obtained was analyzed to evaluate the desulfurization promoting effect of the catalyst composition. The results are shown in Table 1.

**Table 1 Activity evaluation**

| | Composition No. | Components of the composition | Ratio of the components | Sulfur content of oil product, % |
|---|---|---|---|---|
| Example 19 | Z1 | Sulfurized D1, A1 | 85:15 | 0.0013 |
| Example 20 | Z2 | Sulfurized D2, A2 | 88:12 | 0.0003 |
| Example 21 | Z3 | Sulfurized D4, A4 | 76:24 | 0.0025 |
| Example 22 | Z4 | Sulfurized D3, A3 | 78:22 | 0.0018 |
| Example 23 | Z5 | Sulfurized D2, A5 | 78:22 | 0.0002 |
| Example 24 | Z6 | Sulfurized D3, A5 | 78:22 | 0.0011 |
| Example 25 | Z7 | Sulfurized D3, A6 | 78:22 | 0.0015 |
| Example 26 | Z8 | Sulfurized D3, A7 | 85:15 | 0.0008 |
| Example 27 | Z9 | Sulfurized D4, A8 | 76:24 | 0.0023 |
| Example 28 | Z10 | Sulfurized D3, A1 | 78: 22 | 0.0010 |
| Example 29 | Z11 | Oxidized D3, A2 | 68:32 | 0.0015 |
| Example 30 | Z12 | Sulfurized D3, A9 | 88:12 | 0.0013 |
| Example 31 | Z13 | Sulfurized D3, sulfurized A9 | 88:12 | 0.0006 |
| Comparative Example 7 | Z14 | Sulfurized D7, A11 | 78:22 | 0.0031 |
| Comparative Example 8 | Z15 | Sulfurized D3, A12 | 78:22 | 0.0035 |
| Comparative Example 9 | Z16 | Sulfurized D5, A13 | 78:22 | 0.0029 |
| Comparative Example 10 | Z17 | Sulfurized D6, A14 | 78:22 | 0.0032 |
| Comparative Example 11 | Z18 | Sulfurized D2, A15 | 89:11 | 0.0029 |
| Comparative Example 12 | - | Sulfurized A1 6 | 100 | 0.0033 |
| Comparative Example 13 | Z19 | Sulfurized D5, A6 | 78:22 | 0.0037 |
| Comparative Example 14 | Z20 | Sulfurized D3, A10 | 78:22 | 0.0024 |
| Comparative Example 15 | - | Sulfurized D2 | 100 | 0.0035 |

### Example 33

Test on the adsorption and desorption balance of the sulfur-adsorbing component of the present application:
The reactor was packed with only the sulfur-adsorbing component A1. Hydrogen sulfide was dissolved in the hydrogen sulfide-free diesel oil having a sulfur content of 0.0003% obtained by catalytic liquid-phase hydrogenation using the catalyst composition of Example 20 in Example 32 to obtain a hydrogen sulfide mass content of 0.2%, and the resultant was used to wet A1, while preventing the diesel oil from penetrating the catalyst bed, under conditions including: a temperature of 25 °C, a pressure of 6.3MPa, a liquid hourly space velocity of 1.3 h⁻¹, and a wetting time of 0.2 h.

Thereafter, the diesel oil was switched, and the wetted A1 was continuously flushed with the hydrogen sulfide-free diesel oil having a sulfur content of 0.0003% obtained by catalytic liquid-phase hydrogenation using the catalyst composition of Example 20 in Example 32, under the same conditions as the wetting process. A liquid sample was taken every 30 minutes and analyzed for hydrogen sulfide content. The results are shown in Table 2.

### Example 34

Test on the adsorption and desorption balance of the desulfurization catalyst component of the present application:
The reactor was packed with only the sulfurized D2 catalyst obtained in Example 10. Hydrogen sulfide was dissolved in the hydrogen sulfide-free diesel oil having a sulfur content of 0.0003% obtained by catalytic liquid-phase hydrogenation using the catalyst composition of Example 20 in Example 32 to obtain a hydrogen sulfide mass content of 0.2%, and the resultant was used to wet the sulfurized D2, while preventing the diesel oil from penetrating the catalyst bed, under conditions including: a temperature of 25 °C, a pressure of 6.3MPa, a liquid hourly space velocity of 1.3 h⁻¹, and a wetting time of 0.2 h.

Thereafter, the diesel oil was switched, and the wetted sulfurized D2 was continuously flushed with the hydrogen sulfide-free diesel oil having a sulfur content of 0.0003% obtained by catalytic liquid-phase hydrogenation using the catalyst composition of Example 20 in Example 32, under the same conditions as the wetting process. A liquid sample was taken every 30 minutes and analyzed for hydrogen sulfide content. The results are shown in Table 2.

**Table 2 Results of the test on the adsorption and desorption balance**

| Sample No. | Flushing time, min | Hydrogen sulfide content of flushed A1, % | Hydrogen sulfide content of flushed sulfurized D2, % |
|---|---|---|---|
| 1 | 0 | 0.0000 | 0.0000 |
| 2 | 30 | 0.0039 | 0.0097 |
| 3 | 60 | 0.0173 | 0.0291 |
| 4 | 90 | 0.0218 | 0.0210 |
| 5 | 120 | 0.0106 | 0.0021 |
| 6 | 150 | 0.0029 | 0.0003 |
| 7 | 180 | 0.0009 | 0.0001 |

### Example 35

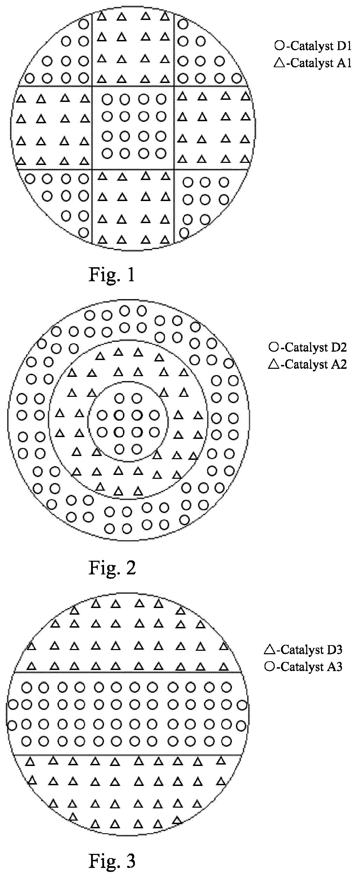

Catalyst D1 and catalyst A1 were loaded into a cylindrical liquid-phase hydrogenation reactor:
The reactor was divided into a plurality of square, approximately square and approximately triangular zones, as viewed in cross section, by intersecting transverse and longitudinal lines, in which catalyst D1 and catalyst A1 were packed in an alternate manner, as shown in Fig. 1. The sides of the central square grid, excluding the edge portions, were 40 mm in length.

### Comparative Example 16

Only catalyst D1 was loaded in the same hydrogenation reactor as in Example 35, where the volume of catalyst D1 loaded was equal to the total volume of the two catalysts in Example 35.

### Example 36

Catalyst D2 and catalyst A2 were loaded into a cylindrical liquid-phase hydrogenation reactor:
The reactor was divided into a plurality of zones in the form of concentric rings, as viewed in cross section, and the spaces in every two adjacent rings were packed with catalyst D2 and catalyst A2 alternatively, as shown in Fig. 2. The radius of the central circle is 20 mm, and the thickness of the rest concentric rings is 20 mm.

### Comparative Example 17

Only catalyst D2 was loaded in the same hydrogenation reactor as in Example 36, where the volume of catalyst D2 loaded was equal to the total volume of the two catalysts in Example 36.

### Example 37

Catalyst D3 and catalyst A3 were loaded into a cylindrical liquid-phase hydrogenation reactor:
The reactor was divided into horizontal zones, as viewed in cross section, and the spaces in every two adjacent horizontal zones were packed with catalyst D3 and catalyst A3 alternatively, as shown in Fig. 3. The thickness of each zone was 60 mm.

### Comparative Example 18

Only catalyst D3 was loaded in the same hydrogenation reactor as in Example 37, where the volume of catalyst D3 loaded was equal to the total volume of the two catalysts in Example 37.

Evaluation of reaction performance:
Reaction was carried out using the reactors packed with catalysts in Examples 35 to 37 and Comparative Examples 16 to 18 as follows:
(1) Sulfurization: wet sulfurization was performed, in which a diesel oil feedstock and hydrogen were introduced into the reactor, and the pressure was increased to 4.0 MPa. The temperature was raised to 160 °C, and then a sulfurizing agent carbon disulfide was introduced in an amount of 10 wt%, based on the total weight of the catalyst. The temperature was further raised to 300 °C, the sulfurization was carried out at constant temperature for 19 hours, and the resultant was cooled to room temperature for further experiment.
(2) hydrodesulfurization reaction: carried out under conditions including a reaction temperature of 360 °C, a reaction pressure of 6.5 MPa, a liquid hourly space velocity of 1.2 h⁻¹, introduction of hydrogen into the reactor by means of dissolved hydrogen in feedstock oil under 6.5 MPa, a feedstock oil of the third atmospheric distillation side-draw diesel straight-run diesel oil from a refinery of Sinopec, with a sulfur content of 1.76%, and a nitrogen content of 161 ppm.

The sulfur content of the oil product obtained was analyzed. The results are shown in Table 3.

**Table 3 Activity evaluation**

| Example No. | Graded catalyst | Sulfur content of oil product, % |
|---|---|---|
| Example 35 | D1+A1 | 0.0009 |
| Comparative Example 16 | D1 | 0.0011 |
| Example 36 | D2+A2 | 0.0003 |
| Comparative Example 17 | D2 | 0.0007 |
| Example 37 | D3+A3 | 0.0016 |
| Comparative Example 18 | D3 | 0.0021 |

Long-period running experiments were conducted as follows, wherein the feedstock oil used is the third atomospheric side cut straight-run diesel oil from a refinery of Sinopec, with a sulfur content of 1.76%, and a nitrogen content of 161 ppm:

### Example 38

This example relates to a long-period experiment.

A long-period test run of 1000 hours was carried out using the reactor and reaction conditions of Example 32, in which the catalyst composition of Example 23 was loaded in the reactor. The sulfur content of the oil product was stable and no deactivation was observed.

### Example 39

This example relates to a long-period experiment.

A long-period test run of 1000 hours was carried out using the reactor, catalyst grading loading scheme, and reaction conditions of Example 35. The sulfur content of the oil product was stable and no deactivation was observed.

### Comparative Example 19

This comparative example relates to a long-period test.

A long-period test run of 1000 hours was carried out using the reactor and reaction conditions of Example 32, in which the catalyst composition of Comparative Example 11 was loaded in the reactor.

### Comparative Example 20

This comparative example relates to a long-period test.

A long-period test run of 1000 hours was carried out using the reactor and reaction conditions of Example 32, in which the sulfur-adsorbing component comprising hydrogenation active metal Zn of Example 11 was loaded in the reactor.

### Comparative Example 21

This comparative example relates to a long-period test.

A long-period test run of 1000 hours was carried out using the reactor and reaction conditions of Example 32, in which the catalyst composition of Comparative Example 13 was loaded in the reactor.

### Comparative Example 22

This comparative example relates to a long-period test.

A long-period test run of 1000 hours was carried out using the reactor and reaction conditions of Example 32, in which the catalyst composition of Comparative Example 14 was loaded in the reactor.

The sulfur contents of the oil product obtained in the middle stage of the reaction (500 hours) and the oil product obtained in the final stage of the reaction, and the running time of Examples 38 to 39 and Comparative Examples 19 to 22 were measured, and the results are shown in Table 4.

**Table 4 Results of long-period run test**

| Example No. | Graded catalyst | Sulfur content of oil product obtained in the middle stage of the reaction (500 h), % | | Sulfur content of oil product obtained in the final stage of the reaction, % | | Running time, h |
|---|---|---|---|---|---|---|
| Example 38 | D2+A5 | | 0.0002 | | 0.0002 | 1000 |
| Example 39 | D1+A1 | | 0.0009 | | 0.0010 | 1000 |
| Comparative Example 19 | D2+A15 | | 1.687 | | 1.76 | 527 |
| Comparative Example 20 | A4 | | 1.76 | | 1.76 | 319 |
| Comparative Example 21 | D5+A6 | 0.0037 | | | 0.0039 | 1000 |
| Comparative Example 22 | D3+A10 | 0.0024 | | | 0.0029 | 1000 |

## Claims

1. An adsorbent (particularly a hydrogen sulfide adsorbent), comprising a porous material and a hydrogenation active metal supported on the porous material, wherein the adsorbent has an average pore diameter of 2-15 nm (preferably 2-10 nm), and a specific surface area of 200-500 m²/g (preferably 250-400 m²/g), and the hydrogenation active metal is present in an amount, calculated as metal oxide, of 2.5 wt% or less (preferably 2 wt% or less, 1.5wt% or less, or 0.05-1 wt%), based on the total weight of the adsorbent.

2. The adsorbent according to claim 1, wherein the hydrogenation active metal is present as an oxide/sulfide, and/or the adsorbent is in a fully sulfurized state, and/or the adsorbent has a sulfur content (calculated as elemental sulfur) of 3 wt% or less (preferably 2 wt% or less, 1 wt% or less, or 0.5 wt% or less, but preferably 0.4 wt% or more, 0.5 wt% or more, 1.0 wt% or more, or 1.3 wt% or more), based on the total weight of the adsorbent.

3. The adsorbent according to claim 1, is a physical adsorbent for hydrogen sulfide, having a hydrogen sulfide retention time of 30-300 min (preferably 40-250 min, more preferably 60-180 min).

4. The adsorbent according to claim 1, wherein the porous material is present in an amount of 90 wt% or more (preferably 92 wt% or more, 94 wt% or more, 95 wt% or more, 98 wt% or more, or 98-99.5 wt%), based on the total weight of the adsorbent, and/or the porous material is at least one selected from the group consisting of activated carbon, inorganic refractory oxides (particularly at least one selected from alumina, silica, magnesia, zirconia and titania) and molecular sieves (particularly at least one selected from alumina and silica), and/or the hydrogenation active metal is at least one selected from the group consisting of Fe, Co, Ni, Cu, Zn, Cr, Mo and W (preferably at least one selected from Fe, Zn, Ni, Co and Cu, more preferably at least one selected from Fe and Ni).

5. The adsorbent according to claim 1, wherein the adsorbent has a particle size of 0.5-5.0 mm (preferably 1-4 mm).

6. An adsorption method, comprising a step of bringing an adsorbent according to claim 1 into contact with a material comprising a sulfur-containing compound (particularly hydrogen sulfide) to adsorb (particularly reversibly adsorb) the sulfur-containing compound (referred to as an adsorption step), and optionally a step of subjecting the adsorbent to a sulfurization treatment (referred to as a sulfurization step) before conducting the adsorption step.

7. A liquid-phase hydrogenation catalyst composition, comprising at least one hydrogenation catalytic component having desulfurization activity and at least one sulfur-adsorbing component, wherein the sulfur-adsorbing component comprises a porous material and a hydrogenation active metal supported on the porous material, wherein the sulfur-adsorbing component has an average pore diameter of 2-15 nm (preferably 2-10 nm), and a specific surface area of 200-500 m²/g (preferably 250-400 m²/g), the hydrogenation active metal is present in an amount of 10 wt% or less (preferably 8 wt% or less, 6 wt% or less, 5 wt% or less, 2.5 wt% or less, 2 wt% or less, 1.5 wt% or less, or 0.05-1 wt%), calculated as metal oxide and based on the total weight of the sulfur-adsorbing component, and the mass content of the hydrogenation active metal in the sulfur-adsorbing component (calculated as metal oxide and based on the total weight of the sulfur-adsorbing component) is 0.06-66% (preferably 1.88-25%, more preferably 2.30-25%) of the mass content of the hydrogenation active component in the hydrogenation catalytic component having desulfurization activity (calculated as metal oxide and based on the total weight of the hydrogenation catalytic component having desulfurization activity).

8. The liquid-phase hydrogenation catalyst composition according to claim 7, wherein the weight ratio of the hydrogenation catalytic component having desulfurization activity to the sulfur-adsorbing component is 30-99 : 1-70 (preferably 40-97 : 3-60, more preferably 60-95 : 5-40), and/or the hydrogenation catalytic component having desulphurisation activity is present in solid particulate form, the sulfur-adsorbing component is present in solid particulate form, and the hydrogenation catalytic component having desulphurisation activity and the sulfur-adsorbing component are present in forms separate from each other (such as separate aggregates or physical mixtures).

9. The liquid-phase hydrogenation catalyst composition according to claim 7, wherein the hydrogenation catalytic component having desulfurization activity is present as porous solid particles having a particle size of 0.5-4.0 mm (preferably 1-4 mm), and/or the hydrogenation catalytic component having desulfurization activity has an average pore diameter of 2-30 nm (preferably 5-25 nm), and/or the hydrogenation catalytic component having desulfurization activity has a specific surface area of 100-400 m²/g (preferably 150-300 m²/g), and/or the sulfur-adsorbing component has a hydrogen sulfide retention time that is 1.3 to 5.0 times (preferably 1.5 to 3.0 times or 2.0 to 3.0 times) that of the hydrogenation catalyst having desulfurization activity, and/or the sulfur-adsorbing component has an average pore diameter that is 10-80% (preferably 20-60% or 20-70%, more preferably 40-65%) of the average pore diameter of the hydrogenation catalyst having desulfurization activity, and/or the sulfur-adsorbing component has a specific surface area that is 110-300% (preferably 110-200%, more preferably 115-160%) of the specific surface area of the hydrogenation catalyst having desulfurization activity.

10. The liquid-phase hydrogenation catalyst composition according to claim 7, wherein the hydrogenation catalytic component having desulfurization activity is at least one selected from the group consisting of supported catalysts and unsupported catalysts.

11. The liquid-phase hydrogenation catalyst composition according to claim 10, wherein the supported catalyst comprises a carrier and a hydrogenation active component, and/or the unsupported catalyst comprises a binder and a hydrogenation active component.

12. The liquid-phase hydrogenation catalyst composition according to claim 11, wherein the hydrogenation active component is present in an amount of 15-40% (preferably 20-35%) by mass, calculated as metal oxide and based on the total weight of the supported catalyst, and/or the hydrogenation active component is present in an amount of 30-80% (preferably 40-65%) by mass, calculated as metal oxide and based on the total weight of the unsupported catalyst.

13. The liquid-phase hydrogenation catalyst composition according to claim 11, wherein the carrier is an inorganic refractory oxide (preferably at least one selected from the group consisting of oxides of the elements of Groups II, III, IV and IVB of the periodic table, more preferably at least one selected from the group consisting of alumina and silica), and/or the binder is an inorganic refractory oxide (preferably at least one selected from the group consisting of oxides of the elements of Groups II, III, IV and IVB of the periodic table, more preferably at least one selected from alumina and silica), and/or, the hydrogenation active component is at least one selected from the group consisting of oxides of Group VIB metals and oxides of Group VIII metals (preferably, the Group VIB metal is Mo and/or W, and the Group VIII metal is Co and/or Ni).

14. The liquid-phase hydrogenation catalyst composition according to claim 13, wherein the Group VIB metal is present in an amount of 15-30% (preferably 18-27%) by mass, calculated as metal oxide, the Group VIII metal is present in an amount of 2-10% (preferably 3-7%) by mass, calculated as metal oxide, based on the total weight of the supported catalyst; and/or the Group VIB metal is present in an amount of 15-60% (preferably 18-57%) by mass, calculated as metal oxide, and the Group VIII metal is present in an amount of 2-20% (preferably 3-18%) by mass, calculated as metal oxide, based on the total weight of the unsupported catalyst.

15. A catalyst bed (particularly a fixed bed), comprising a liquid-phase hydrogenation catalyst composition according to claim 7.

16. The catalyst bed according to claim 15, wherein at least one sub-catalyst bed A (preferably columnar sub-catalyst bed A) is formed along the material flow direction with the hydrogenation catalytic component having desulfurization activity, at least one sub-catalyst bed B (preferably columnar sub-catalyst bed B) is formed along the material flow direction with the sulfur-adsorbing component; and the sub-catalyst bed(s) A and the sub-catalyst bed(s) B are adjacent to each other in an alternative manner, and/or the hydrogenation catalytic component having desulfurization activity and the sulfur-adsorbing component are present in a substantially uniformly mixed form.

17. The catalyst bed according to claim 16, wherein the sub-catalyst bed A has a cross section of any shape (such as at least one selected from the group consisting of rectangular, circular, oval, triangular, parallelogram, annular and irregular shapes), the sub-catalyst bed B has a cross section of any shape (such as at least one selected from the group consisting of rectangular, circular, oval, triangular, parallelogram, annular and irregular shapes), and/or, on any cross section of the catalyst bed, the straight-line distance from the center point of the cross section of any one of the sub-catalyst beds A to the center point of the cross section of any one of the sub-catalyst beds B adjacent thereto is not more than 500 mm (preferably not more than 200 mm); and/or, on any cross section of the catalyst bed, the area of the cross section of the sub-catalyst bed A and the area of the cross section of the sub-catalyst bed B, being the same as or different from each other, are each independently not more than 300000 mm² (preferably not more than 100000 mm²); and/or, on any cross section of the catalyst bed, the shortest distance from any point on the cross section of any one of the sub-catalyst beds A to the edge of the cross section of any one of the sub-catalyst beds B adjacent thereto is not more than 500 mm (preferably not more than 300 mm, more preferably not more than 200 mm, further preferably not more than 100 mm, most preferably not more than 50 mm).

18. The catalyst bed according to claim 15, wherein the hydrogenation catalytic component having desulfurization activity accounts for 35-90% (preferably 45-80%, more preferably 50-75%), and the sulfur-adsorbing component accounts for 10-65% (preferably 20-55%, more preferably 25-50%) of the total volume of the catalyst bed.

19. The catalyst bed according to claim 15, wherein the hydrogenation catalytic component having desulfurization activity is sulfurized, while the sulfur-adsorbing component is sulfurized or not sulfurized, and/or the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr.

20. A hydrogenation process (preferably a liquid-phase fixed bed hydrogenation process), comprising a step of bringing a liquid-phase hydrogenation catalyst composition according to claim 7 or a catalyst bed according to claim 15 into contact with an oil under liquid-phase hydrogenation conditions to conduct a hydrogenation reaction (referred to as a hydrogenation step).

21. The method according to claim 20, wherein the oil is at least one selected from the group consisting of gasoline, kerosene, diesel oil, wax oil, residual oil and coal tar (preferably at least one selected from diesel oil, wax oil and residual oil), and/or the oil has a sulfur content (calculated as hydrogen sulfide) of 0.01-3.0 wt% (preferably 0.01-2.0 wt%), and/or the liquid-phase hydrogenation conditions include: a reaction temperature of 100-500 °C (preferably 100-450 °C), a reaction pressure of 1-20 MPaG (preferably 2-15 MPaG), a liquid hourly space velocity of 1-10 h⁻¹ (preferably 2-10 h⁻¹ , more preferably 2-8 h⁻¹), and a (dissolved) hydrogen content of the oil of 0.01-0.35 wt% (preferably 0.05-0.25 wt%).

22. The method according to claim 20, further comprising a step of sulfurizing the liquid-phase hydrogenation catalyst composition or the catalyst bed prior to the hydrogenation step, and/or wherein the reaction conditions of the sulfurization include: dry sulfurizing or wet sulfurizing with a sulfurizing agent that is at least one selected from the group consisting of hydrogen sulfide, carbon disulfide, dimethyl disulfide, dimethyl sulfide and di-n-butyl sulfide, a sulfurizing pressure of 1.2-15 MPaG (1.2-9.4 MPaG), a sulfurizing temperature of 280-400 °C and a sulfurizing time of 4-22 hr.
